# EUROPÄISCHE PATENTSCHRIFT

(11) **EP 3 884 636 B1**
(45) Veröffentlichungstag und Bekanntmachung des Hinweises auf die Patenterteilung: **18.03.2026**
(21) Anmeldenummer: 19801524.0
(22) Anmeldetag: 07.11.2019
(51) Int. Cl.: H04L 9/40, H04L 67/00, H04L 67/12, G06F 21/51, G06F 21/64, H04L 9/00

(54) **VERFAHREN ZUM BEARBEITEN VON ANWENDUNGSPROGRAMMEN AUF EINEM VERTEILTEN AUTOMATISIERUNGSSYSTEM**
METHOD FOR PROCESSING APPLICATION PROGRAMS IN A DISTRIBUTED AUTOMATION SYSTEM
PROCÉDÉ DE TRAITEMENT DES PROGRAMMES D'APPLICATION SUR UN SYSTÈME D'AUTOMATISATION DISTRIBUÉ

(30) Priorität: 21.11.2018 DE 102018129354
(43) Veröffentlichungstag der Anmeldung: 29.09.2021
(73) Patentinhaber: Phoenix Contact GmbH & Co. KG, 32825 Blomberg (DE)
(72) Erfinder: FRANK, Tobias, 32657 Lemgo (DE); KOOP, Harry, 32791 Lago (DE); BARTEL, Julian, 32657 Lemgo (DE)
(74) Vertreter: Blumbach · Zinngrebe Patentanwälte PartG mbB
(86) Internationale Anmeldenummer: PCT/EP2019/080475
(87) Internationale Veröffentlichungsnummer: WO 2020/104198

(56) Entgegenhaltungen:
- US-A1- 2018 189 732
- US-A1- 2018 227 116
- US-A1- 2018 329 693

## Beschreibung

Die Erfindung betrifft ein Verfahren zum Bearbeiten eines sicherheitsbezogenen Anwenderprogramms für eine Sicherheitssteuerung, die dazu eingerichtet ist, eine automatisierte Vorrichtung zu steuern, welche wenigstens eine Schutzreinrichtung zum Ausführen wenigstens einer Sicherheitsfunktion beinhaltet, wobei das Anwenderprogramm logische Verknüpfungen in Abhängigkeit eines jeweiligen Zustandes der wenigstens einen Sicherheitsfunktion für die Sicherheitssteuerung zum Steuern der Maschine durch die Sicherheitssteuerung festlegt, sowie ein Automatisierungssystem zur Durchführung des Verfahrens.

Bekanntermaßen laufen heutzutage Anwendungen zur Erstellung, Inbetriebnahme, Wartung und Erzeugung des Codes von sicherheitsbezogenen Anwenderprogrammen als geschlossene Anwendung auf einem Gerät.

In diesem Zusammenhang offenbart z.B. die EP 0 997 807 A2 ein Verfahren zum Online-Update sicherheitskritischer Software in der Eisenbahn-Signaltechnik, insbesondere zum Einbringen von Produktionssoftware in bestimmte Zielrechner. Hierzu erhält jeder Teilnehmer in der Bearbeitungskette einen öffentlichen und geheimen Schlüssel. Ferner wird eine Zertifizierungsinstanz bestimmt, welche die Zugehörigkeit der Schlüssel zu den Teilnehmern mit einem Zertifikat bestätigt. Beim Erstellen und Testen der sicherheitskritischen Software in aufeinanderfolgenden Schritten der Bearbeitungskette erhält daraufhin ein jeweiliger Teilnehmer als Vorgabe jeweils die Software und die mit dem geheimen Schlüssel erzeugten Unterschriften und Schlüsselzertifikate der Vorgänger.

Ferner offenbart z.B. die EP 2 363 770 B1 eine Sicherheitsvorrichtung mit einer Konfigurationseinrichtung und einer hiermit konfigurierbaren Sicherheitssteuerung. Die Konfigurationseinrichtung erzeugt hierbei einen Zahlencode, welcher Logikregeln repräsentiert, basierend auf welchen von einem Steuerungsprogramm der Sicherheitssteuerung ein Steuerungssignal in Abhängigkeit von Eingangssignalen erzeugt wird

Aus der DE 10 2015 209 108 A1 ist ein Verfahren zum Autorisieren einer Funktion eines eingebetteten Zielsteuergerätes bekannt, wobei ein Entscheidungsgateway von einem Hardware-Sicherheitsmodul eine für das Zielsteuergerät bestimmte Funktionsanforderung anfordert und diese daraufhin von dem Hardware-Sicherheitsmodul empfängt, wobei die Funktionsanforderung zuvor durch das Hardware-Sicherheitsmodul signiert worden ist. Über einen auf eine kryptografische Identität des Entscheidungsgateways gestützten Kommunikationskanal sendet dieses die empfangene Funktionsanforderung auch einem Backend und empfängt daraufhin von dem Backend ein der Funktionsanforderung entsprechendes, durch das Backend signiertes Ticket und legt dieses ab. Nach einer Anfrage um Freigabe der Funktion durch das Zielsteuergerät wird diese bei gültigem Ticket entsprechend freigegeben und daraufhin das Ticket entwertet.

Weiterhin enthält die US2018227116A1 ein Verfahren zum Generieren und Installieren von Code wie Smart Contracts in Blockchains , die sich in einer verteilten Datenbankumgebung befinden.

Es ist eine Aufgabe der Erfindung einen technischen Weg aufzuzeigen, bei dem die Entwicklung auch von komplexerer Steuerungslogik und folglich das Bearbeiten von Anwendungsprogrammen einschl. des Erzeugens eines entsprechenden sicherheitsbezogenen Maschinencodes auch auf verschiedenen Geräten stattfinden und dennoch eindeutig nachvollzogen werden kann.

Die technische Lösung gemäß der Erfindung ist durch ein Verfahren nach Anspruch 1 gegeben. Bevorzugte Weiterbildungen sind Gegenstand der abhängigen Ansprüche.

Zur technischen Lösung schlägt die Erfindung zum Bearbeiten eines sicherheitsbezogenen Anwenderprogramms für eine Sicherheitssteuerung, die dazu eingerichtet ist, wenigstens eine automatisierte Vorrichtung zu steuern, welche wenigstens eine Schutzreinrichtung zum Ausführen wenigstens einer Sicherheitsfunktion beinhaltet, wobei das Anwenderprogramm logische Verknüpfungen in Abhängigkeit eines jeweiligen Zustandes der wenigstens einen Sicherheitsfunktion für die Sicherheitssteuerung zum Steuern der Maschine durch die Sicherheitssteuerung festlegt, folglich ein Verfahren vor, bei welchem Daten für ein Anwenderprogramm nacheinander auf einer Mehrzahl von verteilt voneinander entfernt angeordneten Geräteumgebungen, welche jeweils ein sicherheitsbezogenes Anwenderprogramm-Bearbeitungswerkzeug zum Erzeugen von Daten zur Verfügung stellen, erzeugt werden, und welches sich ferner durch folgende Schritte kennzeichnet. Auf einer jeweiligen der Geräteumgebungen werden Daten für das Anwenderprogramm über das jeweils von dieser Geräteumgebung zur Verfügung gestellte sicherheitsbezogene Anwenderprogramm-Bearbeitungswerkzeug erzeugt und nach dem Erzeugen der Daten werden diese erzeugten Daten für das Anwenderprogramm jeweils an eine der anderen dieser Geräteumgebungen übergeben.

Vor einer jeweiligen Übergabe von erzeugten Daten wird jeweils eine Signatur zumindest unter Zugrundelegung der Gesamtheit der erzeugten Daten durch die Signatureinrichtung der Geräteumgebung generiert, auf welcher die zu übergebenen Daten für das Anwenderprogramm erzeugt worden sind, und die generierte Signatur wird zusammen mit den erzeugten Daten übergeben.

Nach einer jeweiligen Übergabe von erzeugten Daten zusammen mit einer erzeugten Signatur wird auf der diese Daten und Signatur empfangenden Geräteumgebung eine Prüfung der empfangenen Signatur durch eine Signatureinrichtung dieser empfangenden Geräteumgebung vorgenommen, wobei bei Vorliegen eines fehlerfreien Ergebnisses der Signaturprüfung, erneut Daten für das Anwenderprogramm unter Zugrundelegung der empfangenen Daten erzeugt werden, und die dann mit diesen erneut erzeugten Daten zusammen zu übergebende Signatur zumindest unter Zugrundelegung der Gesamtheit der auf dieser Geräteumgebung erzeugten Daten und der jeweils empfangenen Signatur durch die Signatureinrichtung des Anwenderprogramm-Bearbeitungswerkzeuges generiert wird.

Ein Wesentlicher Vorteil besteht somit darin, dass jeder Schritt bei der Bearbeitung eines sicherheitsbezogenen Anwenderprogramms, d.h. jedwede Erzeugung von Daten für das Anwenderprogramm automatisch dokumentiert und jederzeit eindeutig nachverfolgt werden kann ohne, dass hierzu auf einem gemeinsamen Gerät eine in sich geschlossene Anwendung notwendig ist. Verfälschungen eines Bearbeitungsschrittes können folglich auch auf anderen und auch unterschiedlichen Geräten automatisch erkannt werden.

Die technische Lösung gemäß der Erfindung spiegelt sich auch in einem Automatisierungssystem durch ein Verfahren nach Anspruch 13 wieder.

Für ein zur Durchführung des erfindungsgemäßen Verfahrens ausgebildetes Automatisierungssystem sieht die Erfindung somit ferner vor, dass dieses Automatisierungssystem eine Mehrzahl von verteilt voneinander entfernt angeordneten Geräteumgebungen umfasst, welche jeweils ein sicherheitsbezogenes Anwenderprogramm-Bearbeitungswerkzeug zur Erzeugung von Daten für ein Anwenderprogramm für eine Sicherheitssteuerung zur Verfügung stellen, wobei das Anwenderprogramm-Bearbeitungswerkzeug ferner eine Signatureinrichtung zur Generierung einer Signatur und zur Prüfung von Signaturen umfasst. Zweckmäßig ist hierbei eine erste Geräteumgebung dieser Mehrzahl von verschiedenen, verteilt voneinander entfernt angeordneten Geräteumgebungen, auf einer Kommunikations-Benutzerendeinrichtung, insbesondere mobilen Kommunikations-Benutzerendeinrichtung eingerichtet, eine zweite Geräteumgebung auf einem Cloud-Rechner eingerichtet und es ist ferner wenigstens eine weitere Geräteumgebung dieser Mehrzahl von verteilt voneinander entfernt angeordneten Geräteumgebungen eingerichtet.

Darüber hinaus besitzen die erste Geräteumgebung, die zweite Geräteumgebung und die wenigstens eine weitere Geräteumgebung Schnittstellen und sind ausgebildet, zum Übergeben von jeweils erzeugten Daten zusammen mit einer jeweils generierten Signatur von der ersten an die zweite Geräteumgebung, von der zweiten an die wenigstens eine weitere Geräteumgebung und besonders bevorzugt auch von der wenigstens einen weiteren an die zweite Geräteumgebung.

Die erste Geräteumgebung stellt hierbei als Anwenderprogramm-Bearbeitungswerkzeug zweckmäßig ein sicherheitsbezogenes Programmierwerkzeug zur Erzeugung eines Quellcodes des Anwenderprogramms sowie eine mit dem Programmierwerkzeug zusammenwirkende Signatureinrichtung zur Generierung einer Signatur zumindest unter Zugrundelegung der Gesamtheit des erzeugten Quellcodes zur Verfügung und die zweite Geräteumgebung stellt als Anwenderprogramm-Bearbeitungswerkzeug zweckmäßig ein sicherheitsbezogenes Compilierwerkzeug zur Erzeugung eines Maschinencodes des Anwenderprogramms zur Verfügung, sowie besonders bevorzugt auch ein sicherheitsbezogenes Werkzeug zur Erzeugung von Inbetriebnahmedaten und/oder von Testprozedurdaten für das Anwenderprogramm, und stellt eine mit den Werkzeugen zusammenwirkende Signatureinrichtung zum Prüfen einer jeweils aktuell empfangenen Signatur und zur Generierung einer Signatur zumindest unter Zugrundelegung der Gesamtheit von auf der zweiten Geräteumgebung erzeugten Daten und der letzten jeweils geprüften Signatur zur Verfügung.

Die Bearbeitung eines sicherheitsbezogenen Anwenderprogramms einer Sicherheitssteuerung, d.h. insbesondere die Erstellung, Inbetriebnahme und Wartung von sicherheitsbezogenen Anwenderprogrammen kann folglich bevorzugt auf mobilen Kommunikations-Benutzerendeinrichtungen, z.B. Phone, Tablet, Notebook oder PC mit entsprechenden Editoren gestartet werden. Die Werkzeuge zum Erstellen des Maschinencodes sowie der Inbetriebnahmedaten und/oder Testprozedurdaten für das sicherheitsbezogene Anwenderprogramm der Sicherheitssteuerung sind hingegen auf einem Cloud-Rechner ausgelagert. Die Erzeugung des Maschinencodes sowie der Inbetriebnahmedaten und/oder Testprozedurdaten findet somit im Rahmen der Erfindung entfernt und unabhängig vom mobilen Endgerät auf einem solchen Cloud-Rechner statt, der mit der entsprechend eingerichteten Geräteumgebung folglich die einzelnen bzw. anwendungsbedingten Werkzeuge und hierfür notwendigen Dienste in einem über ein Rechnernetz zugreifbaren, besonders bevorzugt auch über das Internet zugreifbaren, jedoch zentral bedienbaren System vereint.

Die Identifizierung zwischen den einzelnen Geräteumgebungen, wie Phone, Tablet, Cloud-Rechner usw. und der Sicherheitssteuerung ist durch die jeweilige, erfindungsgemäße Signaturgenerierung, -übergabe und -prüfung dennoch eindeutig. Die zum Erzeugen des Maschinencodes erforderlichen Daten, und also insbesondere die Quelldaten für das Anwenderprogramm, zweckmäßig einschließlich etwaig eingebundener Objekt-, Parametrierungs- und/oder Bibliotheksdaten und/oder -dateien, werden mit einer eindeutigen Signatur gesichert und an den Cloud-Rechner übertragen.

Weitere Merkmale und Vorteile der Erfindung ergeben sich aus der nachfolgenden Beschreibung bevorzugter Ausführungsformen unter Bezugnahme auf die beigefügten Zeichnungen, in welchen zeigen:
- Fig. 1: eine stark schematisierte Darstellung einer Ausführungsform eines Automatisierungssystems im Rahmen der Erfindung,
- Fig. 2: einen stark schematisierten Ablauf einer Ausführungsform eines Verfahrens im Rahmen der Erfindung, und
- Fig. 3: einen stark schematisierten Ablauf einer weiteren Ausführungsform eines Verfahrens im Rahmen der Erfindung.

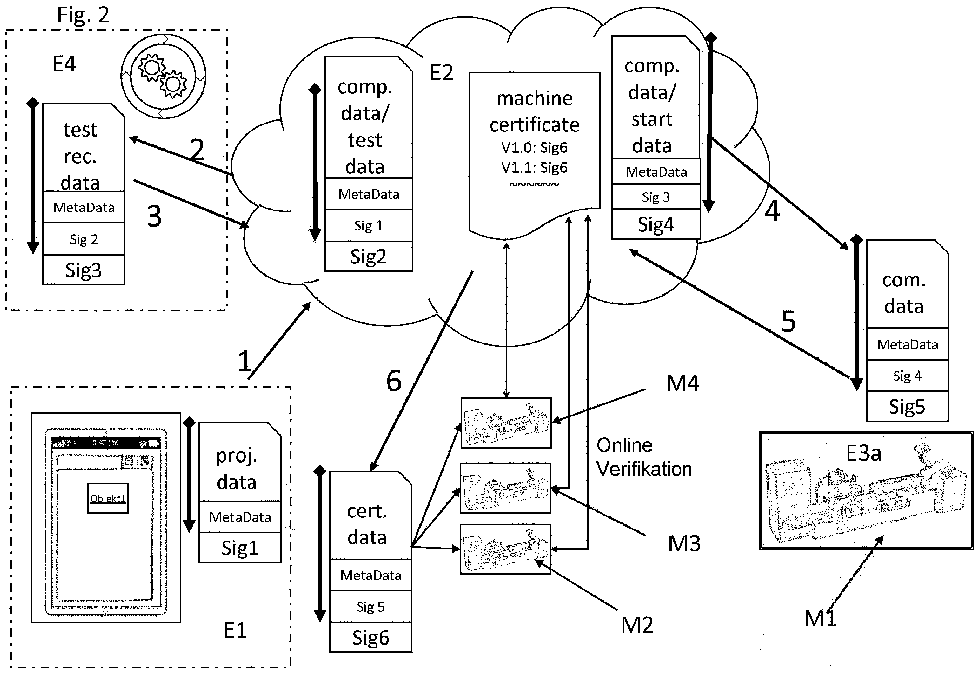

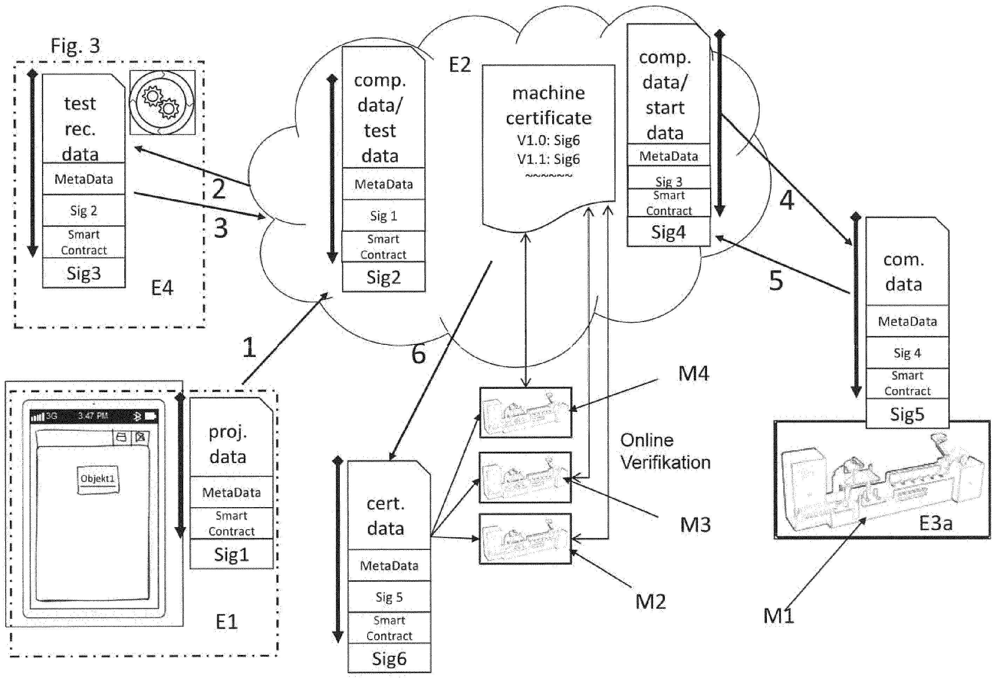

Nachfolgend werden unter Bezugnahme auf die Zeichnungen bevorzugte Ausführungsformen des erfindungsgemäßen Verfahrens zum Bearbeiten eines sicherheitsbezogenen Anwenderprogramms für eine in den Figuren aus Gründen der Übersichtlichkeit nicht näher dargestellte Sicherheitssteuerung sowie ein dazu zweckmäßig eingerichtetes Automatisierungssystem zu dessen Durchführung näher beschrieben. Die Sicherheitssteuerung ist hierbei dazu eingerichtet, eine automatisierte Vorrichtung zu steuern, welche wenigstens eine in den Figuren aus Gründen der Übersichtlichkeit gleichermaßen nicht näher dargestellte Schutzreinrichtung zum Ausführen wenigstens einer Sicherheitsfunktion beinhaltet, wobei das Anwenderprogramm logische Verknüpfungen in Abhängigkeit eines jeweiligen Zustandes der wenigstens einen Sicherheitsfunktion für die Sicherheitssteuerung zum Steuern der Maschine durch die Sicherheitssteuerung festlegt. Derartige Sicherheitssteuerungen und deren Anwendungen sind dem Fachmann an und für sich bekannt und werden daher vorliegend nicht im Einzelnen beschrieben. Für die Anwendung einer solchen Sicherheitssteuerung kann als automatisierte Vorrichtung mit wenigstens einer Schutzreinrichtung beispielsweise eine Maschine, z.B. eine Stanzmaschine, mit einer die Sicherheitsfunktionen eines Not-Halt und einer Lichtschranke integrierenden Schutzeinrichtung genannt werden. Die Schutzeinrichtung wird somit vom Maschinenhersteller zur Risikominderung auf Seiten des Anwenders eingesetzt, d.h. um Gefahren für Mensch und/oder Umwelt auf Seiten des Anwenders vorzubeugen bzw. zu vermeiden, und also im obigen Beispiel insbesondere, um mit einer aus einem Not-Halt und einer Lichtschranke bestehenden Schutzeinrichtung Gefahren für das die Maschine betreuende Personal vorzubeugen. So darf der Antrieb dieser Maschine nur aktiviert werden, wenn beide Sicherheitsfunktionen, d.h. der Not-Halt und die Lichtschranke, der Schutzeinrichtung einen sicheren Zustand melden. Die Überwachung dieser Schutzeinrichtung wird durch eine sicherheitsbezogene Steuerung, d.h. im Rahmen der Terminologie der vorliegenden Beschreibung und Ansprüche durch eine Sicherheitssteuerung ausgeführt, welche entsprechend dem Überwachungsergebnis den Antrieb aktiviert oder auch deaktiviert und somit die Maschine auch insgesamt steuert, z.B. auch in einen sicheren Zustand fährt. Herkömmlicher Weise erstellt hierzu ein Programmierer mit einer dazu geeigneten Software, ein sicherheitsbezogenes Anwenderprogramm für die Sicherheitssteuerung, wodurch die logischen Verknüpfungen in Abhängigkeit eines jeweiligen Zustandes der wenigstens einen Sicherheitsfunktion für die Sicherheitssteuerung zum Steuern der automatisierten Vorrichtung durch die Sicherheitssteuerung festlegt werden. Beispiele von automatisierten Vorrichtungen sind in den Fig. 2 und 3 mit M1, M2, M3 und M4 gekennzeichnet. Die Sicherheitssteuerung kann hierbei in der automatisierten Vorrichtung sein oder diese von extern steuern.

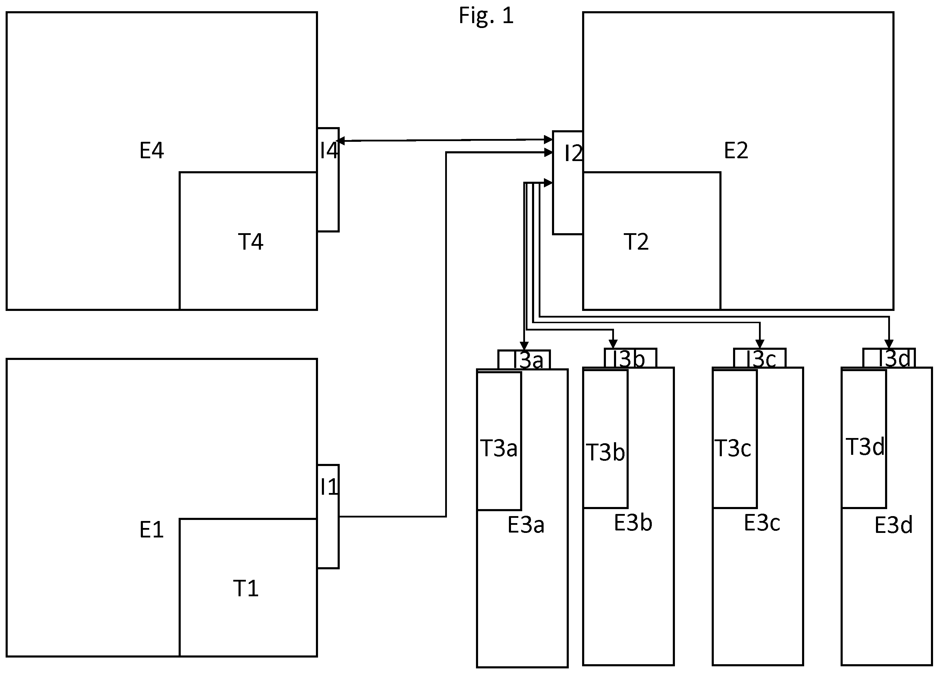

Fig. 1 zeigt in stark schematisierter Darstellung eine Ausführungsform eines Automatisierungssystems mit welchem im Gegensatz zur herkömmlichen Erstellung eines solchen sicherheitsbezogenen Anwenderprogramms eine wie z.B. bei Fig. 2 oder Fig. 3 jeweils in stark schematisiertem Ablauf dargestellte Ausführungsform eines Verfahrens im Rahmen der Erfindung durchgeführt werden kann, d.h. mit welchem das Bearbeiten von Anwendungsprogrammen, und also insbesondere die einzelnen Schritte beim Erstellens von Anwendungsprogrammen auf verschiedenen Geräten erfolgt. Jedes Gerät ist hierbei folglich in einer eigenen Geräteumgebung eingebunden bzw. stellt eine solche bereit. Mit anderen Worten ist folglich eine Mehrzahl von, im Rahmen der Erfindung an der Bearbeitung eines jeweiligen Anwendungsprogramms beteiligten Geräteumgebungen, z.B. die Geräteumgebungen E1, E2, E3a und E4 gemäß Fig.1, welche jeweils ein sicherheitsbezogenes Anwenderprogramm-Bearbeitungswerkzeug T1, T2, T3a und T4 zum Erzeugen von Daten für ein Anwenderprogramm für eine Sicherheitssteuerung zur Verfügung stellen, verteilt voneinander entfernt angeordnet und also auf unterschiedlichen Geräten eingerichtet.

Die für ein Anwenderprogramm jeweils notwendigen Daten, d.h. insbesondere beginnend mit der Erstellung eines Quellcodes über das Kompilieren bis hin zur für die Inbetriebnahme und Wartung notwendige Daten, werden somit nacheinander auf solchen verteilt voneinander entfernt angeordneten Geräteumgebungen erzeugt und anschließend zusammen mit einer Signatur an eine andere dieser Geräteumgebungen übergeben.

Eine erste Geräteumgebung E1 ist ferner zweckmäßig auf einer Kommunikations-Benutzerendeinrichtung eingerichtet, insbesondere auf einem PC, einem Notebook oder einem Mobilgerät wie z.B. Tablet oder Smartphone. Die erste Geräteumgebung E1 verfügt als Anwenderprogramm-Bearbeitungswerkzeug T1 bevorzugt über ein sicherheitsbezogenes, zur Erstellung eines Quellcodes des Anwenderprogramms eingerichtetes Programmierwerkzeug sowie eine mit dem Programmierwerkzeug zusammenwirkende Signatureinrichtung zur Generierung einer Signatur zumindest unter Zugrundelegung der Gesamtheit des erzeugten Quellcodes.

Bevorzugt ist die erste Geräteumgebung E1 auf einer mobilen Kommunikations-Benutzerendeinrichtung eingerichtet, so dass ein die Bearbeitung eines Anwenderprograms startender oder einleitender Programmierer hierbei möglichst Ortsungebunden tätig werden kann.

Eine zweite, mit dem Bezugszeichen E2 gekennzeichnete Geräteumgebung dieser Mehrzahl von verteilt voneinander entfernt angeordneten Geräteumgebungen ist bevorzugt auf einem Cloud-Rechner eingerichtet. Zusätzlich zur Bereitstellung von an und für sich bekannten Computingdiensten, wie z.B. Server, Speicher, Datenbanken, Netzwerkkomponenten, Software, Analyse- oder intelligente Funktionen etc., über ein Rechnernetz ("die Cloud"), wie z.B. ein Firmennetz oder das Internet , kann folglich eine solche Geräteumgebung in zweckmäßiger Weise die einzelnen bzw. anwendungsbedingten Werkzeuge und Dienste in einem über das Rechnernetz zugreifbaren, besonders bevorzugt auch über das Internet zugreifbaren jedoch zentral bedienbaren System vereinen.

Wie bei Fig. 1 angedeutet, sind die erste Geräteumgebung E1 und die zweite Geräteumgebung E2 mit Schnittstellen I1, I2 ausgestattet und zur Übergabe der jeweils auf ersten Geräteumgebung E1 erzeugten Daten zusammen mit einer dort generierten Signatur von der ersten Geräteumgebung E1 an die zweite Geräteumgebung E2 eingerichtet.

Die zweite Geräteumgebung E2, die folglich zum Empfangen dieser auf der ersten Geräteumgebung E1 erzeugten Daten, also insbesondere des Quellcodes, zweckmäßig einschließlich etwaig eingebundener Objekt-, Parametrierungs- und/oder Bibliotheksdaten und/oder -dateien, und generierten Signatur eingerichtet ist, verfügt als Anwenderprogramm-Bearbeitungswerkzeug T2 zweckmäßig über ein sicherheitsbezogenes Compilierwerkzeug zur Erzeugung eines Maschinencodes des Anwenderprogramms. Ferner umfasst das Anwenderprogramm-Bearbeitungswerkzeug T2 der zweiten Geräteumgebung E2 bevorzugt auch ein sicherheitsbezogenes Werkzeug zur Erzeugung von Inbetriebnahmedaten und/oder von Testprozedurdaten für das Anwenderprogramm, wie nachfolgend noch näher erläutert. Darüber hinaus verfügt die zweite Geräteumgebung E2, zweckmäßig als Teil des Anwenderprogramm-Bearbeitungswerkzeugs T2, eine mit den Werkzeugen zusammenwirkende Signatureinrichtung zum Prüfen einer jeweils aktuell empfangenen Signatur und zur Generierung einer Signatur zumindest unter Zugrundelegung der Gesamtheit von auf der zweiten Geräteumgebung E2 erzeugten Daten und der letzten jeweils geprüften Signatur.

Ferner besitzt das Automatisierungssystem im Rahmen der Erfindung wenigstens eine weitere eingerichtete Geräteumgebung. Bei Fig. 1 sind fünf weitere Geräteumgebungen E3a, E3b, E3c, E3d und E4 gezeigt, die mit Schnittstellen I3a, I3b, I3c, I3d und I4 ausgestattet sind. Bevorzugt ist folglich eine Mehrzahl von weiteren eingerichteten Geräteumgebungen vorgesehen. Diese wenigstens eine weitere Geräteumgebung E3a, E3b, E3c, E3d bzw. E4 und die zweite Geräteumgebung E2 sind ferner in zweckmäßiger Weise eingerichtet, zum Übergeben von jeweils erzeugten Daten zusammen mit einer jeweils generierten Signatur von der zweiten an die wenigstens eine weitere Geräteumgebung und besonders bevorzugt auch von der wenigstens einen weiteren an die zweite Geräteumgebung.

Wenigstens eine dieser weiteren Geräteumgebungen, bei Fig. 1 z.B. die vier weiteren Geräteumgebungen E3a, E3b, E3c und E3d, sind hierbei zweckmäßig auf einer automatisierten Vorrichtung eingerichtet, für deren Steuerung erfindungsgemäß das sicherheitsbezogene Anwenderprogramm der Sicherheitssteuerung bearbeitet wird. In diesem Fall werden also bevorzugt auch auf der Geräteumgebung E2 erzeugte Inbetriebnahmedaten an eine solche weitere Geräteumgebung übergeben.

Ergänzend oder alternativ kann jedoch auch eine dieser weiteren Geräteumgebungen, bei Fig. 1 z.B. die weitere Geräteumgebung E4 auf einem eine Testumgebung bereitstellenden Gerät eingerichtet sein. In diesem Fall werden also bevorzugt auch auf der Geräteumgebung E2 erzeugte Testprozedurdaten an eine solche weitere Geräteumgebung übergeben.

Wie zuvor bereits hingewiesen, zeigen die Fig. 2 oder Fig. 3 jeweils in stark schematisiertem Ablauf bevorzugte Ausführungsform des mit einem solchen Automatisierungssystem erfindungsgemäßen Bearbeiten eines sicherheitsbezogenen Anwenderprogramms. Hierbei werden folglich jeweilige Daten für das Anwenderprogramm auf einer jeweiligen der Geräteumgebungen über das jeweils von dieser Geräteumgebung zur Verfügung gestellte sicherheitsbezogene Anwenderprogramm-Bearbeitungswerkzeug erzeugt und unter Zugrundelegung der Gesamtheit dieser erzeugten Daten eine Signatur generiert. Anschließend werden diese erzeugten Daten zusammen mit der Signatur an eine andere dieser Geräteumgebungen übergeben.

Gemäß Fign. 2 und 3 werden beispielsweise auf der Geräteumgebung E1 die mit proj.data bezeichneten Daten erzeugt und zumindest unter Zugrundelegung dieser Daten, d.h. insbesondere des Quellcodes, zweckmäßig einschließlich etwaig eingebundener Objekt-, Parametrierungs- und/oder Bibliotheksdaten und/oder -dateien, die mit Sig1 bezeichnete Signatur generiert. Anschließend werden die mit proj.data bezeichneten Daten, also insbesondere die Quellcodedaten, zweckmäßig einschließlich etwaig eingebundener Objekt-, Parametrierungs- und/oder Bibliotheksdaten und/oder -dateien, zusammen mit der mit Sig1 bezeichneten Signatur an die Geräteumgebung E2 übergeben, wie mit dem mit dem Bezugszeichen 1 gekennzeichneten Pfeil angezeigt.

Nach der Übergabe solcher erzeugten Daten zusammen mit der Signatur wird auf der diese Daten und Signatur empfangenen Geräteumgebung zunächst die empfangene Signatur durch eine Signatureinrichtung dieser Geräteumgebung geprüft. Bei Vorliegen eines fehlerfreien Ergebnisses der Signaturprüfung werden auf dieser Geräteumgebung erneut Daten für das Anwenderprogramm unter Zugrundelegung der empfangenen Daten erzeugt. Eine dann mit diesen erneut erzeugten Daten zusammen zu übergebende Signatur wird ferner zumindest unter Zugrundelegung der Gesamtheit der auf dieser Geräteumgebung erzeugten Daten und der jeweils empfangenen Signatur durch die Signatureinrichtung dieser Geräteumgebung generiert.

Gemäß Fign. 2 und 3 werden beispielsweise auf der Geräteumgebung E2 nach fehlerfreier Prüfung der mit Sig.1 bezeichneten Signatur erneut die mit comp.data bezeichneten Daten erzeugt, und zwar zumindest unter Zugrundelegung der empfangenen, mit proj.data bezeichneten Daten. Diese auf der Geräteumgebung E2 erzeugten, mit comp.data bezeichneten Daten werden zweckmäßig auch dort gespeichert. Ferner wird dann unter Zugrundelegung der erneut erzeugten, mit comp.data bezeichneten Daten sowie der empfangen, mit Sig1 bezeichneten Signatur die mit Sig2 bezeichnete Signatur generiert.

Derartig erneut erzeugte Daten zusammen mit der hierfür generierten Signatur können folglich im Rahmen an eine andere, im Ablauf der Bearbeitung der Daten nachfolgende Geräteumgebung übergeben werden oder auch je nach Bearbeitungsabfolge und von der Bearbeitung umfassten Bearbeitungsschritten an eine Geräteumgebung übergeben werden, auf welcher keine erneuten Daten mehr erzeugt werden.

Bevorzugt werden jedoch Daten für das Anwenderprogramm zumindest bis zum Abschluss einer vollständigen bestimmungsgemäßen Inbetriebnahme des Anwenderprogramms nacheinander auf den verteilt voneinander entfernt angeordneten Geräteumgebungen erzeugt, wie nachfolgend noch ersichtlich.

Wie den Ausführungsformen gemäß Fign. 2 und 3 entnehmbar, werden in bevorzugter Weiterbildung ferner beim jeweiligen Übergeben der erzeugten Daten und Signatur zusätzlich jeweils Metadaten, in den Figuren. mit MetaData bezeichnet, übergeben. Diese können insbesondere die jeweilige Geräteumgebung betreffen, auf welcher die erzeugten Daten erzeugt worden sind, und/oder das Datum der Datenerzeugung und/oder einen Nutzer eines die Daten erzeugenden Anwenderprogramm-Bearbeitungswerkzeuges. Auch können, wie der Ausführungsform gemäß Fig. 3 ersichtlich, auch SmartContract-Daten, in der Fig. mit SmartContract bezeichnet, mit übergeben werden, insbesondere betreffend die Geräteumgebung, an welche die erzeugten Daten übergeben werden, übergeben werden. Wie an und für sich bekannt, basieren SmartContracts auf Computerprotokollen, insbesondere unter Nutzung einer Blockchain-Technologie, und ermöglichen automatische Verträge, die bei bestimmten Ereignissen in Kraft treten, ohne dass eine menschliche Überwachung dabei nötig ist. Im Rahmen der Erfindung kann folglich unter Verwendung von SmartContracts bei Eintritt eines bestimmten Ereignisses automatisch eine vorbestimmte weitere Aktion, insbesondere auf der die übergebenen Daten empfangenen Geräteumgebung ausgelöst werden.

Unter Berücksichtigung vorstehender Ausführungen in Bezug auf die Fign. 1, 2 und 3 werden folglich bevorzugt gemäß Fign. 2 und 3 auf der Geräteumgebung E1 als mit proj.data bezeichnete Daten Quellcodedaten für das Anwenderprogramm erzeugt und auf der Geräteumgebung E2 als mit comp.data bezeichnete Daten Maschinencodedaten für das Anwenderprogramm erzeugt.

Die in Fign. 2 und 3 gezeigten Ausführungsformen repräsentieren somit insbesondere ein Ausführungsbeispiel, bei welchem das sicherheitsbezogene Anwenderprogramm im Rahmen eines bestimmten Projekts zunächst mittels eines Programmierwerkzeuges, also zweckmäßigerweise mittels eines Programmeditors entwickelt und ein Quellcode für dieses sicherheitsbezogene Anwenderprogramm erzeugt wird. Die Geräteumgebung E1 besitzt somit in spezieller Ausführung dieses Programmierwerkzeug als Anwenderprogramm-Bearbeitungswerkzeug (T1, Fig. 1) und ist bevorzugt als oder auf einer Kommunikations-Benutzerendeinrichtung, z.B. in Art eines PCs, Notebooks oder Mobilgeräts, wie z.B. Tablet oder Smartphone, eingerichtet. Nachdem die mit proj.data bezeichnete Daten, d.h. im speziellen die Quellcodedaten für dieses sicherheitsbezogene Anwenderprogramm im Rahmen eines bestimmten Projekts erzeugt worden sind, werden diese Daten, zweckmäßig einschließlich etwaig eingebundener Objekt-, Parametrierungs- und/oder Bibliotheksdaten und/oder -dateien, an mindestens einen Compiler als Compilierwerkzeug des Anwenderprogramm-Bearbeitungswerkzeuges (T2, Fig. 1) der Geräteumgebung E2 übergeben, vgl. Bezugsziffer 1, wobei die Geräteumgebung E2 bei diesem Ausführungsbeispiel auf einem Cloud-Rechner eingerichtet ist. Die Übergabe geschieht zweckmäßig in Form einer die alle diese Daten enthaltenden Datei. Bevorzugt werden jedoch auch weitere Metadaten, wie z.B. den Namen des Bearbeiters der die letzte Änderung vorgenommen hat, übergeben, wobei die vorerwähnte Datei zweckmäßig auch diese Metadaten enthält. Alternativ zu den Metadaten oder auch zusätzlich werden in besonders bevorzugter Weiterbildung (Fig. 3) über das Anwenderprogramm-Bearbeitungswerkzeug (T1, Fig. 1), insbesondere in Form eines Programms erzeugte SmartContract-Daten übergeben, welche die Bedingung(en) für eine automatische Weiterverarbeitung enthalten, wobei die vorerwähnte Datei zweckmäßig auch diese SmartContract-Daten enthält. Insbesondere die auf der Geräteumgebung E1 erzeugten Quellcodedaten werden hierbei zweckmäßig ferner gegen jegliche Art der Verfälschung im Rahmen der Übergabe gesichert. Anschließend wird noch unter Zugrundelegung der Gesamtheit der auf der Geräteumgebung E1 erzeugten Daten eine Signatur Sig.1 generiert, wobei hierzu zweckmäßig eine über die Gesamtheit dieser, auf der Geräteumgebung E1 erzeugten Daten eindeutige Signatur berechnet wird. Die Signatur Sig.1 wird an die erzeugten Daten angehängt und zusammen mit diesen übergeben, vgl. Bezugszeichen 1, vorzugsweise gleichermaßen innerhalb der vorerwähnten Datei.

Der bzw. die Compiler laufen auf dem Cloud-Rechner mit der Geräteumgebung E2. Diese/r Compiler prüft vor der Weiterberarbeitung des sicherheitsbezogenen Anwenderprogramms die empfangene Signatur Sig.1 und erzeugt nach erfolgreicher Prüfung insbesondere aus den in der empfangenen Datei enthaltenen Quellcodedaten die mit comp.data in den Fig. 2 und 3 bezeichneten Daten, also gemäß Ausführungsbeispiel ausführbaren Maschinencode für die Sicherheitssteuerung. Ist der Kompiliervorgang erfolgreich abgeschlossen, kann in einfachster Ausführung im Rahmen der Erfindung unter Zugrundelegung dieser erzeugten Daten bereits erneut eine Signatur generiert, also insbesondere über den Maschinencode erneut eine Signatur berechnet werden, wobei hierbei zusätzlich noch die zuvor empfangene Signatur Sig.1 miteinbezogen wird, und die neu generierte Signatur zumindest zusammen mit dem Maschinencode an eine weitere Geräteumgebung dieser Mehrzahl von verteilt voneinander entfernt angeordneten Geräteumgebungen übertragen werden. Diese kann z.B. auf einer zu steuernden automatisierten Vorrichtung eingerichtet sein.

Zweckmäßig, insbesondere je nach anwendungsspezifisch gegebenenfalls mit übergebenen und also empfangenen SmartContract-Daten, werden über das Anwenderprogramm-Bearbeitungswerkzeug (T2, Fig. 1) der Geräteumgebung E2 zusätzlich zu den Maschinencodedaten zumindest noch Inbetriebnahmedaten für das Anwenderprogramm erzeugt und die Maschinencodedaten und Inbetriebnahmedaten als erzeugte Daten an die wenigstens eine weitere Geräteumgebung zur Inbetriebnahme des Anwenderprogramms übergeben. In diesem Fall erfolgt die erneute Generierung der mit zu übergebenden Signatur folglich zusätzlich zumindest unter weiterer Zugrundelegung der Inbetriebnahmedaten als erzeugte Daten. Es sei jedoch darauf hingewiesen, dass solche Inbetriebnahmedaten für das Anwenderprogramm in Abwandlung auch auf einer anderen, in den Fign. aus Gründen der Übersichtlichkeit nicht dargestellten Geräteumgebung erzeugt werden können, welche zunächst lediglich den Maschinencode zusammen mit der hierzu neu generierten Signatur von der Geräteumgebung E2 erhält, und diese andere Geräteumgebung daraufhin die Inbetriebnahmedaten als erzeugte Daten zusammen mit einer entsprechend neu generierten Signatur und den Maschinencodedaten an die wenigstens eine weitere Geräteumgebung zur Inbetriebnahme des Anwenderprogramms übergibt.

In besonders bevorzugter Ausbildung, werden jedoch, wie auch bei den Ausführungsbeispielen nach Fign. 2 und 3, über das Anwenderprogramm-Bearbeitungswerkzeug (T2, Fig. 1) der Geräteumgebung E2 zusätzlich zu den Maschinencodedaten, d.h. insbesondere bei erfolgreichen Abschluss des Kompiliervorgangs, Testprozedurdaten, in den Fign. 2 und 3 mit testdata bezeichnet, für das Anwenderprogramm erzeugt und die Maschinencodedaten und Testprozedurdaten als erzeugte Daten zunächst an eine weitere Geräteumgebung E4 der Mehrzahl von verteilt voneinander entfernt angeordneten Geräteumgebungen zum Testen des Anwenderprogramms übergeben. In diesem Fall erfolgt die erneute Generierung der mit zu übergebenden Signatur Sig.2 folglich zusätzlich zumindest unter weiterer Zugrundelegung der Testprozedurdaten als erzeugte Daten. Es sei jedoch darauf hingewiesen, dass solche Testprozedurdaten für das Anwenderprogramm in Abwandlung auch auf einer anderen, in den Fign. aus Gründen der Übersichtlichkeit nicht dargestellten Geräteumgebung erzeugt werden können, welche zunächst lediglich den Maschinencode zusammen mit der hierzu neu generierten Signatur von der Geräteumgebung E2 erhält, und diese andere Geräteumgebung daraufhin die Testprozedurdaten als erzeugte Daten zusammen mit einer entsprechend neu generierten Signatur und den Maschinencodedaten an die wenigstens eine weitere Geräteumgebung E4 zum Testen des Anwenderprogramms übergibt.

Auf der weiteren Geräteumgebung E4 werden daraufhin nach Empfangen der Maschinencodedaten und Testprozedurdaten und bei Vorliegen eines fehlerfreien Ergebnisses der Prüfung der empfangen Signatur Sig.2 eine Testprozedur durchlaufen und Testergebnisdaten, in den Fign. 2 und 3 mit testrec.data bezeichnet, für das Anwenderprogramm erzeugt. Diese Testergebnisdaten werden daraufhin als erzeugte Daten in besonders bevorzugter Ausführung wieder zurück an die Geräteumgebung E2 übergeben, wobei hier bei der Generierung für die mit zu übergebende Signatur Sig.3 folglich zumindest die erzeugten Daten testrec.data zugrunde gelegt werden sowie die zuvor empfangene Signatur Sig.2 miteinbezogen wird. Es sei jedoch darauf hingewiesen, dass die Testergebnisdaten in Abwandlung auch an eine andere, in den Fign. aus Gründen der Übersichtlichkeit nicht dargestellten Geräteumgebung anstelle der Geräteumgebung E2 übergeben werden können.

Ist somit zurückkommend auf das mit Bezug auf die in Fign. 2 und 3 gezeigten Ausführungsformen zuvor beschriebene Ausführungsbeispiel auf der Geräteumgebung E2 der Kompiliervorgang zur Erzeugung der mit comp.data in den Fig. 2 und 3 bezeichneten Daten aus den in der empfangenen Datei enthaltenen Quellcodedaten erfolgreich abgeschlossen und bei zusätzlich übergebenen SmartContract-Daten (Fig. 3) somit ein bestimmtes Ereignis eingetreten, werden für das sicherheitsbezogene Anwenderprogramm auf der Geräteumgebung E2 Testprozedurdaten testdata für einzelne Testfälle erzeugt. Anschließend wird über den Maschinencode comp.data, die Testprozedurdaten testdata und zweckmäßig über weitere Metadaten, wie z.B. Informationen zu dem/den Compiler/n, die Signatur Sig.1 aus dem vorherigen Bearbeitungsschritt und/oder zweckmäßig über weitere Bedingungen zur automatischen Weiterberarbeitung in Form von SmartContract-Daten die neue Signatur Sig.2 berechnet. Eine in den SmartContract-Daten enthaltene Bedingung kann z.B. sein, dass nach der erfolgreichen Durchführung aller Testfälle die Ergebnisse in festgelegter Weise automatisch an die Geräteumgebung E2, d.h. gemäß Ausführungsbeispiel an den Cloud-Rechner zurück übertragen werden. Die eben genannten Daten werden zweckmäßig wiederum in Form einer Datei an eine Testumgebung weitergereicht, d.h. gemäß Fig. 2 und 3 an die weitere Geräteumgebung E4 übergeben, vgl. Bezugszeichen 2.

Nachdem der Test erfolgreich durchgeführt wurde und entsprechende Testergebnisdaten, testrec.data erzeugt worden sind, ist eine wie die vorgenannte Bedingung erfüllt. Die Ergebnisse werden folglich zweckmäßig automatisch an die Geräteumgebung E2 rückübertragen, wobei die hierzu mit zu übertragene Signatur Sig.3 über die, die Testergebnisse enthaltenen Testprozedurdaten testdata, die Signatur Sig.2 aus dem vorhergegangenen Bearbeitungsschritt der Geräteumgebung E2 und gegebenenfalls über weitere Metadaten, wie z.B. Informationen zur Testumgebung, und/oder SmartContract-Daten neu berechnet und also generiert wird. An den Cloud-Rechner werden somit die vorgenannten Daten zusammen mit der Signatur Sig.3 zweckmäßig wiederum in Form einer Datei übertragen, vgl. Bezugszeichen 3.

Nachdem die Testergebnisse des erfolgreich durchgeführten Tests auf dem Cloud-Rechner, d.h. allgemein der Geräteumgebung E2 vorliegen, wird dort zunächst wieder die empfange Signatur Sig.3 geprüft und bei Vorliegen eines fehlerfreien Ergebnisses dieser Signaturprüfung werden gemäß dargestellter bevorzugter Ausführung anschließend Inbetriebnahmedaten für das Anwenderprogramm, wie zuvor bereits beschrieben, erzeugt. Der Cloud-Rechner, d.h. allgemein die Geräteumgebung E2, stellt folglich in besonders bevorzugter Weiterbildung dann erst die Inbetriebnahmedaten, bei Fign. 2 und 3 mit startdata bezeichnet, als erzeugte Daten zusammen mit den zuvor erzeugten Maschinencodedaten comp.data zur Verfügung, z.B. in Form einer Inbetriebnahmedatei, und übergibt diese dann an die vorstehend bereits beschriebene weitere, oder auch dritte Geräteumgebung E3a, zur Inbetriebnahme des Anwenderprogramms. Diese Maschinencodedaten wurden, wie vorstehend gesagt, zweckmäßig auf der Geräteumgebung E2 gespeichert. Zusammen mit diesen erzeugten Daten, insbesondere auch innerhalb einer solchen Datei wird wieder eine Signatur Sig.4 übergeben, die wieder unter Zugrundelegung aller, wie zuvor beschriebenen Daten und der empfangenen Signatur generiert wird, d.h. insbesondere über den Maschinencode, die Inbetriebnahmedaten, bevorzugt auch über weitere Metataden, wie z. B. wer die Inbetriebnahmedaten generiert hat und/oder eine weitere SmartContract-Daten, wie z.B., dass für eine Freigabe eine vollständige Validierung der Verdrahtung erfolgt sein muss, und über die empfangene Signatur aus Schritt 3 berechnet wird. Zusammen mit der Signatur Sig.4 wird dann diese Datei auf Geräteumgebung E3a, welche auf einer zu steuernden automatisierten Vorrichtung eingerichtet ist, zur Inbetriebnahme übertragen, vgl. Bezugszeichen 4.

Auf der Geräteumgebung E3a der Mehrzahl von verteilt voneinander entfernt angeordneten Geräteumgebungen wird nach Empfangen der Maschinencodedaten und Inbetriebnahmedaten und bei Vorliegen eines fehlerfreien Ergebnisses der Prüfung der Signatur Sig.4 eine Inbetriebnahmeprozedur durchlaufen und, wenn die Inbetriebnahme vollständig abgeschlossen ist, werden zweckmäßig Inbetriebnahme-Validierungsdaten, bei Fign. 2 und 3 mit com.data bezeichnet, für das Anwenderprogramm erzeugt.

Es wird eine Datei mit dem Validierungsergebnis erzeugt. Diese, insbesondere wieder in einer Datei enthaltenen Inbetriebnahme-Validierungsdaten, werden ergänzt um eine neue Signatur Sig.5. Diese wird in entsprechender Weise zu den vorangegangenen Bearbeitungsschritten generiert und demnach insbesondere über die zuvor empfangene Signatur Sig.4 des vorangegangenen Bearbeitungsschrittes, über die Ergebnisse, d.h. die Inbetriebnahme-Validierungsdaten, sowie zweckmäßig über weitere Metadaten, wie z.B. wer die Validierung durchgeführt hat, und/oder weitere SmartContract-Daten berechnet. Anschließend werden diese Inbetriebnahme-Validierungsdaten als erzeugte Daten zusammen mit den weiteren gegebenenfalls in der Datei enthaltenen Daten sowie der Signatur Sig.5, insbesondere zum Abschluss der vollständigen bestimmungsgemäßen Inbetriebnahme des Anwenderprogramms, wiederum äußerst zweckmäßig zurück an die Geräteumgebung E2, d.h. im speziellen Ausführungsbeispiel an den Cloud-Rechner übertragen, vgl. Bezugszeichen 5. Es sei jedoch darauf hingewiesen, dass die Inbetriebnahme-Validierungsdaten in Abwandlung auch an eine andere, in den Fign. aus Gründen der Übersichtlichkeit nicht dargestellten Geräteumgebung anstelle der Geräteumgebung E2 übertragen werden können.

Ist der Schritt der Inbetriebnahme und Validierung abgeschlossen gilt das sicherheitsbezogene Anwenderprogramm als zertifiziert. Hierzu werden gemäß dargestellter bevorzugter Ausführung auf der Geräteumgebung E2 bei Vorliegen eines fehlerfreien Ergebnisses der Prüfung der Signatur Sig.5 Zertifizierungsdaten, bei Fign. 2 und 3 mit machine certificate bezeichnet, für das Anwenderprogramm erzeugt und zweckmäßig auf der Geräteumgebung E2 gespeichert, insbesondere in einem Zertifikat für Geräteumgebungen, die auf einer zu steuernden automatisierten Vorrichtung, welche die wenigstens eine Schutzreinrichtung zum Ausführen wenigstens einer Sicherheitsfunktion beinhaltet, eingerichtet sind. Ferner wird eine neue Signatur Sig.6 generiert, d.h. insbesondere über die Zertifizierungsdaten als erzeugte Daten, über den zuvor erzeugten Maschinencode und zweckmäßig weitere Metadaten und/oder SmartContract-Daten, sowie die aus dem vorhergegangenen Bearbeitungsschritt empfangene Signatur Sig.5 eine neue Signatur Sig.6 berechnet. Diese neu generierte Signatur Sig.6 wird zweckmäßig gleichermaßen in vorgenanntes Zertifikat eingetragen, welches bevorzugt auf dem Cloud-Rechner, d.h. allgemein auf der Geräteumgebung E2 liegt. Anschließend können die vorgenannten Daten zusammen mit der neu generierten Signatur Sig.6 automatisiert auf mehrere Geräteumgebungen E3b, E3c und/oder E3d, ergänzend oder alternativ aber auch E3a, die auf einer zu steuernden automatisierten Vorrichtung, welche die wenigstens eine Schutzreinrichtung zum Ausführen wenigstens einer Sicherheitsfunktion beinhaltet, eingerichtet sind, übertragen werden, vgl. Bezugszeichen 6. Wie zuvor beschrieben sind solche automatisierten Vorrichtung in den Fig. 2 und 3 mit M1, M2, M3 und M4 gekennzeichnet.

Auf den Geräteumgebungen E3b, E3c, E3d und/oder E3a kann daraufhin nach Empfangen der Zertifizierungsdaten und Maschinencodedaten und bei Vorliegen eines fehlerfreien Ergebnisses der Signaturprüfung das Anwenderprogramm bestimmungsgemäß abgearbeitet werden. Zur Prüfung der Signatur Sig.6 ist in bevorzugter Weiterbildung insbesondere vorgesehen, dass auf den Geräteumgebungen E3b, E3c, E3d und/oder E3a und also insbesondere die automatisierte Vorrichtung eine Online Verifikation durchführt und prüft, ob die Signatur Sig.6 der empfangenen Datei in dem entsprechenden Maschinenzertifikat auf der Geräteumgebung E2 eingetragen ist. Bei positivem Ergebnis der Prüfung wird der Maschinencode dann zur Ausführung gebracht. Es sei jedoch darauf hingewiesen, dass das Zertifikat grundsätzlich auch auf einer anderen, in den Fign. aus Gründen der Übersichtlichkeit nicht dargestellten Geräteumgebung anstelle der Geräteumgebung E2, gespeichert sein kann.

Unter Würdigung vorstehender Beschreibung ist somit ersichtlich, dass die Erzeugung von Inbetriebnahme- und/oder Testprozedurdaten weder zwingend erfolgen muss noch, dass im Falle des Erzeugens solcher Inbetriebnahme- und/oder Testprozedurdaten zwingend auf der Geräteumgebung E2 erfolgen muss. Auch ist es folglich nicht zwingend, dass nach Durchlaufen der Testprozedur und/oder Inbetriebnahme hierauf basierte, neu erzeugte Daten wieder zurück an die Geräteumgebung E2 übergeben werden müssen. So können neben der Geräteumgebung E2 auch weitere bzw. andere Geräteumgebungen oder Instanzen im Rahmen der Erfindung umfasst sein, auf welchen dann die jeweiligen, gemäß vorstehender Beschreibung in bevorzugter Ausführung jeweils auf der Geräteumgebung E2 durchgeführten Bearbeitungsschritte durchgeführt werden. Sofern hierbei auch auf die Maschinencodedaten zurückgegriffen werden muss, ist dann folglich dieser in entsprechend signierter Weise wie zuvor beschrieben, auch an die für den entsprechenden Bearbeitungsschritt vorgesehene, weitere bzw. andere Geräteumgebung zu übertragen.

Unter Würdigung vorstehender Beschreibung betrifft die vorliegende Erfindung folglich im Rahmen ferner der Bearbeitung eines sicherheitsbezogenen Anwenderprogramms für eine Sicherheitssteuerung, in besonders bevorzugter Ausgestaltung insbesondere die Erstellung, Inbetriebnahme und Wartung von sicherheitsbezogenen Anwenderprogrammen eines Steuerungsgerätes für Automatisierungsmaschinen mittels mobiler Endgeräte, wie z.B. Smartphone, Tablet, Notebook oder PC, wobei hierfür die Editoren auf dem jeweiligen mobilen Endgerät laufen und die Compiler zum Erzeugen des Maschinencodes indessen auf einem entfernten Cloud-Rechner laufen. Die Erzeugung des Maschinencodes für die sicherheitsbezogene Steuerung findet hierbei somit auf einem Cloud-Rechner statt. Die Identifizierung zwischen dem mobilen Endgerät und dem folglich insbesondere sicherheitsbezogenen Steuerungsgerät ist eindeutig und die zum Erzeugen des Maschinencodes erforderlichen Daten, wie z.B. die Quellcodedaten des Anwenderprogramms, werden mit einer eindeutigen Signatur gesichert und an den Cloud-Rechner übertragen. Auf dem Cloud-Rechner wird aus den übertragenen Daten der Maschinencode erzeugt. Über die dabei entstandenen Daten und die Signatur aus dem vorhergehenden Schritt wird eine neue Signatur generiert. Der erzeugte Maschinencode mit der Signatur und möglichen Metadaten kann bei einem erfolgreichen Erzeugen des Maschinencodes automatisch oder manuell an eine Testumgebung weitergegeben werden. Dieser Automatismus ist bevorzugt in Form eines sogenannten Smart Contracts in der Signatur vorgegeben. Der Code des Smart Contract ist bei der Verwendung von Smart Contracts auch über die Signatur gesichert. In einer Testumgebung können daraufhin Testfälle zur Prüfung des sicherheitsbezogenen Anwenderprogramms ausgeführt werden. Sind die Tests erfolgreich durchgeführt, wird über die Testdaten und die evtl. vorhandenen Metadaten wieder eine Signatur berechnet, in der auch die Signatur des vorhergehenden Schrittes eingebunden wird. Auch hier ist bevorzugt über die Smart Contracts vorgegeben, dass nur nach einem erfolgreichen Test die Daten mit der neu berechneten Signatur zweckmäßiger Weise wieder an den Cloud-Rechner oder grundsätzlich auch eine andere Instanz übertragen werden. War der Test erfolgreich, wird über den Maschinencode mit evtl. weiteren Inbetriebnahmedaten und der Signatur des vorhergehenden Schrittes wieder eine Signatur berechnet und für eine Inbetriebnahme an eine Maschine übertragen. Auch hierbei wird festgelegt, dass eine automatische Freigabe des Programms nur nach erfolgreicher Inbetriebnahme geschieht. Ist die Inbetriebnahme erfolgreich abgeschlossen, wird über den Maschinencode mit evtl. weiteren Daten, wie z.B. Zertifizierungsdaten, sowie der Signatur aus dem vorhergehenden Schritt wieder eine Signatur berechnet und die Daten auf die Maschinen verteilt. Mit Hilfe der Signatur, die zweckmäßig mit zur Maschine übertragen wurde, kann der gesamte Sicherheitslebenszyklus, auch als Safety Lebenszyklus bezeichnet, nachvollzogen und von der Maschine ferner eine Online Verifikation gegen ein zweckmäßiger Weise auf dem Cloud-Rechner oder grundsätzlich auch auf einer anderen Instanz abgelegtes Maschinen Zertifikat verglichen werden. Somit ist sichergestellt, dass das sicherheitsbezogene Anwenderprogramm alle Schritte des Sicherheitslebenszyklus durchlaufen hat, und das Programm zertifiziert ist.

Insbesondere ist der gesamte Safety Lebenszyklus mit Simulation der Applikation, Inbetriebnahme und Verteilung auf die Maschinen mit abgedeckt, da jeder Schritt im Lebenszyklus automatisch dokumentiert wird und jederzeit eindeutig nachverfolgt werden kann sowie Verfälschungen eines Schrittes erkannt werden können.

## Patentansprüche

1. Verfahren zum Bearbeiten eines sicherheitsbezogenen Anwenderprogramms für eine Sicherheitssteuerung, die dazu eingerichtet ist, wenigstens eine automatisierte Vorrichtung (M1, M2, M3, M4) zu steuern, welche wenigstens eine Schutzeinrichtung zum Ausführen wenigstens einer Sicherheitsfunktion beinhaltet, wobei das Anwenderprogramm logische Verknüpfungen in Abhängigkeit eines jeweiligen Zustandes der wenigstens einen Sicherheitsfunktion für die Sicherheitssteuerung zum Steuern der automatisierten Vorrichtung (M1, M2, M3, M4) durch die Sicherheitssteuerung festlegt, **gekennzeichnet durch** die Schritte:
- Erzeugen von Daten (proj.data, comp.data, startdata, testdata, testrec.data, com.data, machine certificate, cert.data) für ein Anwenderprogramm nacheinander auf einer Mehrzahl von verteilt voneinander entfernt angeordneten Geräteumgebungen (E1, E2, E3a, E3b, E3c, E3d, E4), welche jeweils ein sicherheitsbezogenes Anwenderprogramm-Bearbeitungswerkzeug (T1, T2, T3a, T3b, T3c, T3d, T4) zur Verfügung stellen, wobei die Daten (proj.data, comp.data, startdata, testdata, testrec.data, com.data, machine certificate, cert.data) für das Anwenderprogramm auf einer jeweiligen der Geräteumgebungen (E1, E2, E3a, E3b, E3c, E3d, E4) über das jeweils von dieser Geräteumgebung (E1, E2, E3a, E3b, E3c, E3d, E4) zur Verfügung gestellte sicherheitsbezogene Anwenderprogramm-Bearbeitungswerkzeug (T1, T2, T3a, T3b, T3c, T3d, T4) erzeugt werden und nach dem Erzeugen der Daten (proj.data, comp.data, startdata, testdata, testrec.data, com.data, machine certificate, cert.data) die erzeugten Daten zusammen mit einer Signatur (Sig1, Sig2, Sig3, Sig4, Sig5, Sig6) an eine andere dieser Geräteumgebungen (E2, E3a, E3b, E3c, E3d, E4) übergeben werden (1, 2, 3, 4, 5, 6),
- wobei vor der Übergabe der erzeugten Daten zusammen mit der Signatur (Sig1, Sig2, Sig3, Sig4, Sig5, Sig6), diese Signatur zumindest unter Zugrundelegung der Gesamtheit der erzeugten Daten durch eine Signatureinrichtung der Geräteumgebung (E1, E2, E3a, E3b, E3c, E3d, E4) generiert wird, auf welcher die Daten (proj.data, comp.data, startdata, testdata, testrec.data, com.data, machine certificate, cert.data) für das Anwenderprogramm erzeugt worden sind,
- wobei nach der Übergabe der erzeugten Daten zusammen mit der Signatur (Sig1, Sig2, Sig3, Sig4, Sig5, Sig6), auf der diese Daten (proj.data, comp.data, startdata, testdata, testrec.data, com.data, machine certificate, cert.data) und Signatur (Sig1, Sig2, Sig3, Sig4, Sig5, Sig6) empfangenden Geräteumgebung (E2, E3a, E3b, E3c, E3d, E4)
∘ die empfangene Signatur (Sig1, Sig2, Sig3, Sig4, Sig5, Sig6) durch eine Signatureinrichtung dieser Geräteumgebung (E2, E3a, E3b, E3c, E3d, E4) geprüft wird, und bei Vorliegen eines fehlerfreien Ergebnisses der Signaturprüfung
∘ erneut Daten (comp.data, startdata, testdata, testrec.data, com.data, machine certificate, cert.data) für das Anwenderprogramm unter Zugrundelegung der empfangenen Daten (proj.data, comp.data, startdata, testdata, testrec.data, com.data, machine certificate) erzeugt werden, und die dann mit diesen erneut erzeugten Daten zusammen zu übergebende Signatur (Sig2, Sig3, Sig4, Sig5, Sig6) zumindest unter Zugrundelegung der Gesamtheit der auf dieser Geräteumgebung (E2, E3a, E3b, E3c, E3d, E4) erzeugten Daten (comp.data, startdata, testdata, testrec.data, com.data, machine certificate, cert.data) und der jeweils empfangenen Signatur (Sig1, Sig2, Sig3, Sig4, Sig5) durch die Signatureinrichtung dieser Geräteumgebung (E2, E3a, E3b, E3c, E3d, E4) generiert wird,

2. Verfahren nach vorstehendem Anspruch, wobei Daten für das Anwenderprogramm zumindest bis zum Abschluss einer vollständigen bestimmungsgemäßen Inbetriebnahme des Anwenderprogramms nacheinander auf den verteilt voneinander entfernt angeordneten Geräteumgebungen (E1, E2, E3a, E3b, E3c, E3d, E4) erzeugt werden.

3. Verfahren nach einem der vorstehenden Ansprüche, wobei beim jeweiligen Übergeben der erzeugten Daten zusammen mit der Signatur (Sig1, Sig2, Sig3, Sig4, Sig5, Sig6) zusätzlich jeweils Metadaten (MetaData), insbesondere betreffend die Geräteumgebung (E1, E2, E3a, E3b, E3c, E3d, E4), auf welcher die erzeugten Daten erzeugt worden sind, betreffend das Datum der Datenerzeugung und/oder betreffend einen Nutzer des die Daten (proj.data, comp.data, startdata, testdata, testrec.data, com.data, machine certificate, cert.data) erzeugenden Anwenderprogramm-Bearbeitungswerkzeuges (T1, T2, T3a, T3b, T3c, T3d, T4), und/oder SmartContract-Daten betreffend die Geräteumgebung (E2, E3a, E3b, E3c, E3d, E4), an welche die erzeugten Daten übergeben werden, übergeben werden.

4. Verfahren nach einem der vorstehenden Ansprüche, wobei
- auf einer ersten (E1) der Mehrzahl von verteilt voneinander entfernt angeordneten Geräteumgebungen (E1, E2, E3a, E3b, E3c, E3d, E4) Quellcodedaten (proj.data) für das Anwenderprogramm erzeugt werden und von dieser als erzeugte Daten an eine zweite (E2) der Mehrzahl von verteilt voneinander entfernt angeordneten Geräteumgebungen (E1, E2, E3a, E3b, E3c, E3d, E4) übergeben werden (1),
- auf der zweiten (E2) der Mehrzahl von verteilt voneinander entfernt angeordneten Geräteumgebungen (E1, E2, E3a, E3b, E3c, E3d, E4) nach Empfangen der Quellcodedaten (proj.data) und bei Vorliegen eines fehlerfreien Ergebnisses der Signaturprüfung Maschinencodedaten (comp.data) für das Anwenderprogramm erzeugt werden,
- die Maschinencodedaten (comp.data) als erzeugte Daten an wenigstens eine dritte (E3a, E3b, E3c, E3d) der Mehrzahl von verteilt voneinander entfernt angeordneten Geräteumgebungen (E1, E2, E3a, E3b, E3c, E3d, E4) übergeben werden (2, 4).

5. Verfahren nach vorstehendem Anspruch 4, wobei
- zusätzlich zu den Maschinencodedaten (comp.data), insbesondere auf der zweiten (E2) der Mehrzahl von verteilt voneinander entfernt angeordneten Geräteumgebungen (E1, E2, E3a, E3b, E3c, E3d, E4) nach Empfangen der Quellcodedaten (proj.data), Inbetriebnahmedaten (startdata) für das Anwenderprogramm erzeugt werden, und
- die Maschinencodedaten (comp.data) und Inbetriebnahmedaten (startdata) als erzeugte Daten an wenigstens eine dritte (E3a) der Mehrzahl von verteilt voneinander entfernt angeordneten Geräteumgebungen (E1, E2, E3a, E3b, E3c, E3d, E4) zur Inbetriebnahme des Anwenderprogramms übergeben werden (4).

6. Verfahren nach vorstehendem Anspruch 4, wobei
- zusätzlich zu den Maschinencodedaten (comp.data), insbesondere auf der zweiten (E2) der Mehrzahl von verteilt voneinander entfernt angeordneten Geräteumgebungen (E1, E2, E3a, E3b, E3c, E3d, E4) nach Empfangen der Quellcodedaten (proj.data), Testprozedurdaten (testdata) für das Anwenderprogramm erzeugt werden, und
- die Maschinencodedaten (comp,data) und Testprozedurdaten (testdata) als erzeugte Daten an eine vierte (E4) der Mehrzahl von verteilt voneinander entfernt angeordneten Geräteumgebungen (E1, E2, E3a, E3b, E3c, E3d, E4) zum Testen des Anwenderprogramms übergeben werden (2),
- auf der vierten (E4) der Mehrzahl von verteilt voneinander entfernt angeordneten Geräteumgebungen (E1, E2, E3a, E3b, E3c, E3d, E4) nach Empfangen der Maschinencodedaten (comp.data) und Testprozedurdaten (testdata) und bei Vorliegen eines fehlerfreien Ergebnisses der Signaturprüfung eine Testprozedur durchlaufen und Testergebnisdaten (testrec.data) für das Anwenderprogramm erzeugt werden,
- die Testergebnisdaten (testrec.data) als erzeugte Daten an die zweite (E2) der Mehrzahl von verteilt voneinander entfernt angeordneten Geräteumgebungen (E1, E2, E3a, E3b, E3c, E3d, E4) übergeben werden (3).

7. Verfahren nach vorstehendem Anspruch 6, wobei
- auf der zweiten (E2) der Mehrzahl von verteilt voneinander entfernt angeordneten Geräteumgebungen (E1, E2, E3a, E3b, E3c, E3d, E4) nach Empfangen der Testergebnisdaten (testrec.data) und bei Vorliegen eines fehlerfreien Ergebnisses der Signaturprüfung Inbetriebnahmedaten (startdata) für das Anwenderprogramm erzeugt werden,
und
- die Inbetriebnahmedaten (startdata) als erzeugte Daten zusammen mit den zuvor erzeugten Maschinencodedaten (comp.data) an eine dritte (E3a) der Mehrzahl von verteilt voneinander entfernt angeordneten Geräteumgebungen (E1, E2, E3a, E3b, E3c, E3d, E4) zur Inbetriebnahme des Anwenderprogramms übergeben werden (4).

8. Verfahren nach vorstehenden Ansprüchen 5 oder 7, wobei
- auf der dritten (E3a) der Mehrzahl von verteilt voneinander entfernt angeordneten Geräteumgebungen (E1, E2, E3a, E3b, E3c, E3d, E4) nach Empfangen der Maschinencodedaten (comp.data) und Inbetriebnahmedaten (startdata) und bei Vorliegen eines fehlerfreien Ergebnisses der Signaturprüfung eine Inbetriebnahmeprozedur durchlaufen und Inbetriebnahme-Validierungsdaten (com.data) für das Anwenderprogramm erzeugt werden, und
- die Inbetriebnahme-Validierungsdaten (com.data) als erzeugte Daten an die zweite (E2) der Mehrzahl von verteilt voneinander entfernt angeordneten Geräteumgebungen (E1, E2, E3a, E3b, E3c, E3d, E4) zum Abschluss der vollständigen bestimmungsgemäßen Inbetriebnahme des Anwenderprogramms übergeben werden (5),

9. Verfahren nach vorstehendem Anspruch 8, wobei
auf der zweiten (E2) der Mehrzahl von verteilt voneinander entfernt angeordneten Geräteumgebungen (E1, E2, E3a, E3b, E3c, E3d, E4) nach Empfangen der Inbetriebnahme-Validierungsdaten (com.data) und bei Vorliegen eines fehlerfreien Ergebnisses der Signaturprüfung Zertifizierungsdaten (machine certificate) für das Anwenderprogramm erzeugt werden.

10. Verfahren nach vorstehendem Anspruch 9, wobei die erzeugten Zertifizierungsdaten (machine certificate) und auf der zweiten (E2) der Mehrzahl von verteilt voneinander entfernt angeordneten Geräteumgebungen (E1, E2, E3a, E3b, E3c, E3d, E4) gespeichert werden.

11. Verfahren nach vorstehendem Anspruch 9 oder 10, wobei
die Zertifizierungsdaten (machine certificate) als erzeugte Daten zusammen mit den zuvor erzeugten Maschinencodedaten (comp.data) an eine Anzahl von dritten (E3a, E3b, E3c, E3d) der Mehrzahl von verteilt voneinander entfernt angeordneten Geräteumgebungen (E1, E2, E3a, E3b, E3c, E3d, E4) übergeben werden (6).

12. Verfahren nach vorstehendem Anspruch 11, wobei
auf der Anzahl von dritten (E3a, E3b, E3c, E3d) der Mehrzahl von verteilt voneinander entfernt angeordneten Geräteumgebungen (E1, E2, E3a, E3b, E3c, E3d, E4) nach Empfangen der Zertifizierungsdaten (machine certificate) und Maschinencodedaten (comp.data) und bei Vorliegen eines fehlerfreien Ergebnisses der Signaturprüfung das Anwenderprogramm bestimmungsgemäß abgearbeitet wird.

13. Automatisierungssystem zur Durchführung des Verfahrens nach einem der vorstehenden Ansprüche 1 bis 12, umfassend:
- eine Mehrzahl von verteilt voneinander entfernt angeordneten Geräteumgebungen (E1, E2, E3a, E3b, E3c, E3d, E4), welche jeweils ein sicherheitsbezogenes Anwenderprogramm-Bearbeitungswerkzeug (T1, T2, T3a, T3b, T3c, T3d, T4) zur Erzeugung von Daten (proj.data, comp.data, startdata, testdata, testrec.data, com.data, machine certificate, cert.data) für ein Anwenderprogramm für eine Sicherheitssteuerung zur Verfügung stellen, wobei das Anwenderprogramm-Bearbeitungswerkzeug (T1, T2, T3a, T3b, T3c, T3d, T4) ferner eine Signatureinrichtung umfasst,
- wobei
- eine erste Geräteumgebung (E1) dieser Mehrzahl von verteilt voneinander entfernt angeordneten Geräteumgebungen (E1, E2, E3a, E3b, E3c, E3d, E4), auf einer Kommunikations-Benutzerendeinrichtung, welche insbesondere als mobile Kommunikations-Benutzerendeinrichtung eingerichtet ist,
- eine zweite Geräteumgebung (E2) dieser Mehrzahl von verteilt voneinander entfernt angeordneten Geräteumgebungen (E1, E2, E3a, E3b, E3c, E3d, E4), auf einem Cloud-Rechner eingerichtet ist, und
- wenigstens eine weitere Geräteumgebung (E3a, E3b, E3c, E3d, E4) dieser Mehrzahl von verteilt voneinander entfernt angeordneten Geräteumgebungen (E1, E2, E3a, E3b, E3c, E3d, E4) eingerichtet ist, wobei
- die erste Geräteumgebung (E1), die zweite Geräteumgebung (E2) und die wenigstens eine weitere Geräteumgebung (E3a, E3b, E3c, E3d, E4) Schnittstellen (I1, I2, 13a, 13b, 13c, 13d, I4) besitzen und ausgebildet sind, zum Übergeben von jeweils erzeugten Daten zusammen mit einer jeweils generierten Signatur (Sig1, Sig2, Sig3, Sig4, Sig5, Sig6) von der ersten (E1) an die zweite Geräteumgebung (E2), von der zweiten (E2) an die wenigstens eine weitere Geräteumgebung (E3a, E3b, E3c, E3d, E4) und von der wenigstens einen weiteren (E3a, E3b, E3c, E3d, E4) an die zweite Geräteumgebung (E2),
und insbesondere wobei
- die erste Geräteumgebung (E1) als Anwenderprogramm-Bearbeitungswerkzeug (T1) ein sicherheitsbezogenes Programmierwerkzeug zur Erzeugung eines Quellcodes des Anwenderprogramms sowie eine mit dem Programmierwerkzeug zusammenwirkende Signatureinrichtung zur Generierung einer Signatur (Sig1) zumindest unter Zugrundelegung der Gesamtheit des erzeugten Quellcodes zur Verfügung stellt,
- die zweite Geräteumgebung (E2) als Anwenderprogramm-Bearbeitungswerkzeug (T2) ein sicherheitsbezogenes Compilierwerkzeug zur Erzeugung eines Maschinencodes des Anwenderprogramms sowie bevorzugt ferner ein sicherheitsbezogenes Werkzeug zur Erzeugung von Inbetriebnahmedaten (startdata) und/oder von Testprozedurdaten (testdata) für das Anwenderprogramm zur Verfügung stellt, und wobei die zweite Geräteumgebung (E2) eine mit dem Werkzeug bzw. den Werkzeugen zusammenwirkende Signatureinrichtung zum Prüfen einer jeweils aktuell empfangenen Signatur (Sig1, Sig3, Sig5, Sig6) und zur Generierung einer Signatur (Sig2, Sig4) zumindest unter Zugrundelegung der Gesamtheit von auf der zweiten Geräteumgebung (E2) erzeugten Daten (comp.data, startdata, testdata, machine certificate) und der letzten jeweils geprüften Signatur (Sig1, Sig3, Sig5, Sig6).

## Claims

1. Method for processing a safety-related user program for a safety control system that is designed to control at least one automated device (M1, M2, M3, M4) that includes at least one protective device for performing at least one safety function, wherein the user program defines logical links depending on a respective state of the at least one safety function for the safety control system for controlling the automated device (M1, M2, M3, M4) by the safety control system, **characterized by** the steps:
- generating data (proj.data, comp.data, startdata, testdata, testrec.data, com.data, machine certificate, cert.data) for an user program sequentially on a plurality of device environments (E1, E2, E3a, E3b, E3c, E3d, E4) distributed spaced apart from one another, each of which provides a safety-related user program processing tool (T1, T2, T3a, T3b, T3c, T3d, T4), wherein the data (proj.data, comp.data, startdata, testdata, testrec.data, com.data, machine certificate, cert.data) for the user program are generated on a respective device environment of the device environments (E1, E2, E3a, E3b, E3c, E3d, E4) via the safety-related user program processing tool (T1, T2, T3a, T3b, T3c, T3d, E4) provided in each case by this device environment (E1, E2, E3a, E3b, E3c, E3d, E4). E3b, E3c, E3d, E4) and, after the data (proj.data, comp.data, startdata, testdata, testrec.data, com.data, machine certificate, cert.data) are generated, the generated data are transferred (1, 2, 3, 4, 5, 6) together with a signature (Sig1, Sig2, Sig3, Sig4, Sig5, Sig6) to another of these device environments (E2, E3a, E3b, E3c, E3d, E4),
- wherein, prior to the transfer of the generated data together with the signature (Sig1, Sig2, Sig3, Sig4, Sig5, Sig6), this signature is generated at least on the basis of the entirety of the generated data by a signature device of the device environment (E1, E2, E3a, E3b, E3c, E3d, E4) at least on the basis of the entirety of the generated data, on which the data (proj.data, comp.data, startdata, testdata, testrec.data, com.data, machine certificate, cert.data) for the user program has been generated,
- wherein, after the transfer of the generated data together with the signature (Sig1, Sig2, Sig3, Sig4, Sig5, Sig6) on the device environment (E2, E3a, E3b, E3c, E3d, E4) receiving these data (proj.data, comp.data, startdata, testdata, testrec.data, com.data, machine certificate, cert.data) and signature (Sig1, Sig2, Sig3, Sig4, Sig5, Sig6)
∘ the received signature (Sig1, Sig2, Sig3, Sig4, Sig5, Sig6) is checked by a signature device of this device environment (E2, E3a, E3b, E3c, E3d, E4), and if the result of the signature check is error-free
∘ Data (comp.data, startdata, testdata, testrec.data, com.data, machine certificate, cert.data) for the user program based are newly regenerated based on the received data (proj.data, comp.data, startdata, testdata, testrec.data, com.data, machine certificate), and the signature (Sig2, Sig3, Sig4, Sig5, Sig6) to then be transferred together with this newly generated data is generated by the signature device of this device environment (E2, E3a, E3b, E3c, E3d, E4) at least based on the entirety of the data (comp.data, startdata, testdata, testrec.data, com.data, machine certificate, cert.data) generated on this device environment (E2, E3a, E3b, E3c, E3d, E4) and the respective received signature (Sig1, Sig2, Sig3, Sig4, Sig5).

2. Method according to the preceding claim, wherein data for the user program is generated sequentially on the device environments (E1, E2, E3a, E3b, E3c, E3d, E4) distributed spaced apart from one another, at least until the completion of a complete intended start-up of the user program.

3. Method according to one of the preceding claims, wherein, when the generated data is transferred together with the signature (Sig1, Sig2, Sig3, Sig4, Sig5, Sig6), additional metadata (MetaData) is also transferred in each case, in particular concerning the device environment (E1, E2, E3a, E3b, E3c, E3d, E4) on which the generated data was generated, concerning the date of data generation and/or concerning a user of the user program processing tool (T1, T2, T3a, T3b, T3c, T3d, T4) that generated the data (proj.data, comp.data, startdata, testdata, testrec.data, com.data, machine certificate, cert.data), and/or SmartContract data concerning the device environment (E2, E3a, E3b, E3c, E3d, E4) to which the generated data is transferred.

4. Method according to one of the preceding claims, wherein
- on a first (E1) of the plurality of device environments (E1, E2, E3a, E3b, E3c, E3d, E4) source code data (proj.data) for the user program is generated and transferred (1) from this as generated data to a second (E2) of the plurality of device environments (E1, E2, E3a, E3b, E3c, E3d, E4) distributed spaced apart from one another,
- on the second (E2) of the plurality of device environments (E1, E2, E3a, E3b, E3c, E3d, E4) distributed spaced apart from one another, machine code data (comp.data) for the user program is generated after receiving the source code data (proj.data) and if the result of the signature check is error-free,
- the machine code data (comp.data) is transferred (2, 4) as generated data to at least one third (E3a, E3b, E3c, E3d) of the plurality of device environments (E1, E2, E3a, E3b, E3c, E3d, E4) distributed spaced apart from one another.

5. Method according to the preceding claim 4, wherein
- in addition to the machine code data (comp.data), in particular on the second (E2) of the plurality of device environments (E1, E2, E3a, E3b, E3c, E3d, E4) distributed spaced apart from one another, after receiving the source code data (proj.data), startup data (startdata) for the user program is generated, and
- the machine code data (comp.data) and start-up data (startdata) are transferred (4) as generated data to at least one third (E3a) of the plurality of device environments (E1, E2, E3a, E3b, E3c, E3d, E4) distributed spaced apart from one another for start-up of the user program.

6. Method according to the preceding claim 4, wherein
- in addition to the machine code data (comp.data), in particular on the second (E2) of the plurality of device environments (E1, E2, E3a, E3b, E3c, E3d, E4) distributed spaced apart from one another, after receiving the source code data (proj.data), test procedure data (testdata) for the user program are generated, and
- the machine code data (comp.data) and test procedure data (testdata) are transferred (2) as generated data to a fourth (E4) of the plurality of device environments (E1, E2, E3a, E3b, E3c, E3d, E4) distributed spaced apart from one another for testing the user program,
- on the fourth (E4) of the plurality of device environments (E1, E2, E3a, E3b, E3c, E3d, E4) distributed spaced apart from one another, after receiving the machine code data (comp.data) and test procedure data (testdata) and if the result of the signature check is error-free, a test procedure is run and test result data (testrec.data) is generated for the user program,
- the test result data (testrec.data) is transferred (3) as generated data to the second (E2) of the plurality of device environments (E1, E2, E3a, E3b, E3c, E3d, E4) distributed spaced apart from one another .

7. Method according to the preceding claim 6, wherein
- on the second (E2) of the plurality of device environments (E1, E2, E3a, E3b, E3c, E3d, E4) distributed spaced apart from one another, after receiving the test result data (testrec.data) and if there is an error-free result of the signature check, start-up data (startdata) for the user program is generated,
and
- the start-up data (startdata) is transferred (4) as generated data together with the previously generated machine code data (comp.data) to a third (E3a) of the plurality of device environments (E1, E2, E3a, E3b, E3c, E3d, E4) distributed spaced apart from one another for start-up of the user program.

8. Method according to the preceding claims 5 or 7, wherein
- on the third (E3a) of the plurality of device environments (E1, E2, E3a, E3b, E3c, E3d, E4) distributed spaced apart from one another, after receiving the machine code data (comp.data) and start-up data (startdata) and if the result of the signature check is error-free, a start-up procedure is run and start-up validation data (com.data) is generated for the user program,
and
- the start-up validation data (com.data) is transferred (5) as generated data to the second (E2) of the plurality of device environments (E1, E2, E3a, E3b, E3c, E3d, E4) distributed spaced apart from one another for concluding the complete intended start-up of the user program .

9. Method according to the preceding claim 8, wherein
on the second (E2) of the plurality of device environments (E1, E2, E3a, E3b, E3c, E3d, E4) distributed spaced apart from one another, after receiving the start-up validation data (com.data) and if the result of the signature check is error-free, certification data (machine certificate) for the user program is generated.

10. Method according to the preceding claim 9, wherein the generated certification data (machine certificate) is stored on the second (E2) of the plurality of device environments (E1, E2, E3a, E3b, E3c, E3d, E4) distributed spaced apart from one another.

11. Method according to the preceding claim 9 or 10, wherein
the certification data (machine certificate) is transferred (6) as generated data together with the previously generated machine code data (comp.data) to a number of third (E3a, E3b, E3c, E3d) of the plurality of device environments (E1, E2, E3a, E3b, E3c, E3d, E4) distributed spaced apart from one another.

12. Method according to the preceding claim 11, wherein
on the number of third (E3a, E3b, E3c, E3d) of the plurality of device environments (E1, E2, E3a, E3b, E3c, E3d, E4) distributed spaced apart from one another, after receiving the certification data (machine certificate) and machine code data (comp.data) and, if the signature check yields an error-free result, the user program is executed as intended.

13. Automation system for carrying out the method according to one of the preceding claims 1 to 12, comprising:
- a plurality of device environments (E1, E2, E3a, E3b, E3c, E3d, E4) distributed spaced apart from one another, each of which has a safety-related user program processing tool (T1, T2, T3a, T3b, T3c, T3d, T4) for generating data (proj.data, comp.data, startdata, testdata, testrec.data, com.data, machine certificate, cert.data) for a user program for a safety control, wherein the user program processing tool (T1, T2, T3a, T3b, T3c, T3d, T4) further comprises a signature device,
- wherein
- a first device environment (E1) of this plurality of device environments (E1, E2, E3a, E3b, E3c, E3d, E4) distributed spaced apart from one another is configured on a communication user terminal equipment which is set up in particular as a mobile communication user terminal equipment,
- a second device environment (E2) of this plurality of device environments (E1, E2, E3a, E3b, E3c, E3d, E4) distributed spaced apart from one another is configured up on a cloud computer, and
- at least one further device environment (E3a, E3b, E3c, E3d, E4) of this plurality of device environments (E1, E2, E3a, E3b, E3c, E3d, E4) distributed spaced apart from one another is configured, wherein
- the first device environment (E1), the second device environment (E2) and the at least one further device environment (E3a, E3b, E3c, E3d, E4) have interfaces (I1, I2, I3a, I3b, I3c, I3d, I4) and are designed to transfer data generated in each case together with a signature (Sig1, Sig2, Sig3, Sig4, Sig5, Sig6) generated in each case from the first (E1) to the second device environment (E2), from the second (E2) to the at least one further device environment (E3a, E3b, E3c, E3d, E4) and from the at least one further device environment (E3a, E3b, E3c, E3d, E4) to the second device environment (E2),
and in particular wherein
- the first device environment (E1) provides as an user program processing tool (T1) a safety-related programming tool for generating a source code of the user program and a signature device cooperating with the programming tool for generating a signature (Sig1) at least on the basis of the entirety of the generated source code,
- the second device environment (E2) provides, as an user program processing tool (T2), a safety-related compilation tool for generating a machine code of the user program and, preferably, also a safety-related tool for generating start-up data (startdata) and/or test procedure data (testdata) for the user program, and wherein the second device environment (E2) provides a signature device cooperating with the tool or tools for checking a respectively currently received signature (Sig1, Sig3, Sig5, Sig6) and for generating a signature (Sig2, Sig4) at least on the basis of the entirety of data (comp.data, startdata, testdata, machine certificate) generated on the second device environment (E2) and the last signature (Sig1, Sig3, Sig5, Sig6) checked in each case.

## Revendications

1. Procédé de traitement d'un programme utilisateur lié à la sécurité pour un dispositif de commande de sécurité configuré pour commander au moins un dispositif (M1, M2, M3, M4) automatisé, lequel comprend au moins un dispositif de protection pour exécuter au moins une fonction de sécurité, dans lequel le programme utilisateur définit des connexions logiques en fonction de l'état respectif de l'au moins une fonction de sécurité pour que le dispositif de commande de sécurité commande le dispositif (M1, M2, M3, M4) automatisé au moyen du dispositif de commande, **caractérisé par** les étapes suivantes :
- la génération successive des données (proj.data, comp.data, startdata, testdata, testrec.data, com.data, machine certificate, cert.data) pour un programme utilisateur dans une pluralité d'environnements d'appareil (E1, E2, E3a, E3b, E3c, E3d, E4) distribués et espacés, lesquels fournissent respectivement un outil de traitement (T1, T2, T3a, T3b, T3c, T3d, T4) du programme utilisateur lié à la sécurité, dans lequel les données (proj.data, com.data, startdata, testdata, testrec.data, com.data, machine certificate, cert.data) sont générées pour le programme utilisateur dans l'un des environnements d'appareil (E1, E2, E3a, E3b, E3c, E3d, E4) respectifs par l'intermédiaire de l'outil de traitement (T1, T2, T3a, T3b, T3c, T3d, T4) du programme utilisateur lié à la sécurité fourni par ledit environnement d'appareil (E1, E2, E3a, E3b, E3c, E3d, E4) et après la génération des données (proj.data, comp.data, startdata, testdata, testrec.data, com.data, machine certificate, cert.data), les données générées conjointement avec une signature (Sig1, Sig2, Sig3, Sig4, Sig5, Sig6) sont transférées (1, 2, 3, 4, 5, 6) à un autre desdits environnements d'appareil (E2, E3a, E3b, E3c, E3d, E4),
- dans lequel, avant le transfert des données générées conjointement avec la signature (Sig1, Sig2, Sig3, Sig4, Sig5, Sig6), ladite signature est générée au moins sur la base de l'intégralité des données générées par un dispositif de signature de l'environnement d'appareil (E1, E2, E3a, E3b, E3c, E3d, E4) dans lequel les données (proj.data, comp.data, startdata, testdata, testrec.data, com.data, machine certificate, cert.data) ont été générées pour le programme utilisateur,
- dans lequel, après le transfert des données générées conjointement avec la signature (Sig1, Sig2, Sig3, Sig4, Sig5, Sig6), dans l'environnement de l'appareil (E2, E3a, E3b, E3c, E3d, E4) recevant lesdites données (proj.data, comp.data, startdata, testdata, testrec.data, com.data, machine certificate, cert.data) et la signature (Sig1, Sig2, Sig3, Sig4, Sig5, Sig6),
∘ la signature (Sig1, Sig2, Sig3, Sig4, Sig5, Sig6) reçue est vérifiée au moyen du dispositif de signature dudit environnement d'appareil (E2, E3a, E3b, E3c, E3d, E4), et lorsque le résultat de la vérification de la signature est exempt d'erreur,
∘ les données (comp.data, startdata, testdata, testrec.data, com.data, machine certificate, cert.data) sont nouvellement générées pour le programme utilisateur sur la base des données (proj.data, comp.data, startdata, testdata, testrec.data, com.data, machine certificate) reçues et la signature (Sig2, Sig3, Sig4, Sig5, Sig6) à transmettre avec lesdites données nouvellement générées par le dispositif de signature dudit environnement d'appareil (E2, E3a, E3b, E3c, E3d, E4) est générée au moins sur la base de l'intégralité des données (comp.data, startdata, testdata, testrec.data, com.data, machine certificate, cert.data) générées dans ledit environnement d'appareil (E2, E3a, E3b, E3c, E3d, E4) et de la signature (Sig1, Sig2, Sig3, Sig4, Sig5) respectivement reçue.

2. Procédé selon la revendication précédente, dans lequel les données pour le programme utilisateur sont générées successivement dans les environnements d'appareil (E1, E2, E3a, E3b, E3c, E3d, E4) distribués et espacés au moins jusqu'à l'achèvement d'une mise en fonctionnement complète déterminée du programme utilisateur.

3. Procédé selon l'une quelconque des revendications précédentes, dans lequel, en outre, lors de chaque transfert des données générées conjointement avec la signature (Sig1, Sig2, Sig3, Sig4, Sig5, Sig6), des métadonnées (MetaData) sont respectivement transférées, en particulier concernant l'environnement d'appareil (E1, E2, E3a, E3b, E3c, E3d, E4) dans lequel les données ont été générées, concernant la date de génération des données et/ou concernant un utilisateur de l'outil de traitement (T1, T2, T3a, T3b, T3c, T3d, T4) du programme utilisateur générant les données (proj.data, comp.data, startdata, testdata, testrec.data, com.data, machine certificate, cert.data), et/ou des données SmartContract concernant l'environnement d'appareil (E2, E3a, E3b, E3c, E3d, E4) vers lequel les données générées sont transférées.

4. Procédé selon l'une quelconque des revendications précédentes, dans lequel
- des données de code source (proj.data) sont générées pour le programme utilisateur dans un premier (E1) de la pluralité d'environnements d'appareil (E1, E2, E3a, E3b, E3c, E3d, E4) distribués et espacés et sont transférées (1) dudit environnement d'appareil sous forme de données générées vers un deuxième (E2) de la pluralité d'environnements d'appareil (E1, E2, E3a, E3b, E3c, E3d, E4) distribués et espacés,
- des données de code machine (comp.data) sont générées pour le programme utilisateur dans le deuxième (E2) de la pluralité d'environnements d'appareil (E1, E2, E3a, E3b, E3c, E3d, E4) distribués et espacés après la réception des données de code source (proj.data) et lorsque le résultat de la vérification de la signature est exempt d'erreur,
- les données de code machine (comp.data) sont transférées (2, 4) sous la forme de données générées à au moins un troisième (E3a, E3b, E3c, E3d) de la pluralité d'environnements d'appareil (E1, E2, E3a, E3b, E3c, E3d, E4) distribués et espacés.

5. Procédé selon la revendication 4 précédente, dans lequel
- des données de mise en fonctionnement (startdata) sont générées pour le programme utilisateur en plus des données de code machine (comp.data), en particulier dans la deuxième (E2) de la pluralité d'environnements d'appareil (E1, E2, E3a, E3b, E3c, E3d, E4) distribués et espacés après la réception des données de code source (proj.data), et
- les données de code machine (comp.data) et les données de mise en fonctionnement (startdata) sont transférées (4) sous la forme de données générées à au moins un troisième (E3a) de la pluralité d'environnements d'appareil (E1, E2, E3a, E3b, E3c, E3d, E4) distribués et espacés pour la mise en fonctionnement du programme utilisateur.

6. Procédé selon la revendication 4 précédente, dans lequel
- des données de procédure d'essai (testdata) sont générées pour le programme utilisateur en plus des données de code machine (comp.data), en particulier dans la deuxième (E2) de la pluralité d'environnements d'appareil (E1, E2, E3a, E3b, E3c, E3d, E4) distribués et espacés après la réception des données de code source (proj.data), et
- les données de code machine (comp.data) et les données de procédure d'essai (testdata) sont transférées (2) sous la forme de données générées à un quatrième (E4) de la pluralité d'environnements d'appareil (E1, E2, E3a, E3b, E3c, E3d, E4) distribués et espacés pour la mise à l'essai du programme utilisateur,
- une procédure d'essai est exécutée et des données de résultat d'essai (testrec.data) sont générées pour le programme utilisateur dans le quatrième (E4) de la pluralité d'environnements d'appareil (E1, E2, E3a, E3b, E3c, E3d, E4) distribués et espacés après la réception des données de code machine (comp.data) et des données de procédure d'essai (testdata) et lorsque le résultat de la vérification de la signature est exempt d'erreur,
- les données de résultat d'essai (testrec.data) sont transférées (3) sous la forme de données générées au deuxième (E2) de la pluralité d'environnements d'appareil (E1, E2, E3a, E3b, E3c, E3d, E4) distribués et espacés.

7. Procédé selon la revendication 6 précédente, dans lequel
- des données de mise en fonctionnement (startdata) sont générées pour le programme utilisateur dans le deuxième (E2) de la pluralité d'environnements d'appareil (E1, E2, E3a, E3b, E3c, E3d, E4) distribués et espacés après la réception des données de résultat d'essai (testrec.data) et lorsque le résultat de la vérification de la signature est exempt d'erreur, et
- les données de mise en fonctionnement (startdata) sont transférées (4) sous la forme de données générées conjointement avec les données de code machine (comp.data) précédemment générées à un troisième (E3a) de la pluralité d'environnements d'appareil (E1, E2, E3a, E3b, E3c, E3d, E4) distribués et espacés pour le fonctionnement du programme utilisateur.

8. Procédé selon les revendications 5 ou 7 précédentes, dans lequel
- une procédure de fonctionnement est effectuée et des données de validation de la mise en fonctionnement (com.data) sont générées pour le programme utilisateur dans le troisième (E3) de la pluralité d'environnements d'appareil (E1, E2, E3a, E3b, E3c, E3d, E4) distribués et espacés après la réception des données de code machine (comp.data) et des données de mise en fonctionnement (startdata) et lorsque le résultat de la vérification de la signature est exempt d'erreur, et
- les données de validation de la mise en fonctionnement (com.data) sont transférées (5) sous la forme de données générées au deuxième (E2) de la pluralité d'environnements d'appareil (E1, E2, E3a, E3b, E3c, E3d, E4) distribués et espacés pour achever la mise en fonctionnement complète déterminée du programme utilisateur.

9. Procédé selon la revendication 8 précédente, dans lequel
des données de certification (machine certificate) sont générées pour le programme utilisateur dans le deuxième (E2) de la pluralité d'environnements d'appareil (E1, E2, E3a, E3b, E3c, E3d, E4) distribués et espacés après la réception des données de validation de mise en fonctionnement (com.data) et lorsque le résultat de la vérification de la signature est exempt d'erreur.

10. Procédé selon la revendication 9 précédente, dans lequel les données de certification (machine certificate) générées sont mémorisées dans le deuxième (E2) de la pluralité d'environnements d'appareil (E1, E2, E3a, E3b, E3c, E3d, E4) distribués et espacés.

11. Procédé selon les revendications 9 ou 10 précédentes, dans lequel les données de certification (machine certificate) sont transférées (6) sous la forme de données générées conjointement avec les données de code machine (comp.data) précédemment générées à un nombre de troisièmes (E3a, E3b, E3c, E3d) de la pluralité d'environnements d'appareil (E1, E2, E3a, E3b, E3c, E3d, E4) distribués et espacés.

12. Procédé selon la revendication 11 précédente, dans lequel
le programme utilisateur est conformément exécuté dans le nombre de troisièmes (E3a, E3b, E3c, E3d) de la pluralité d'environnements d'appareil (E1, E2, E3a, E3b, E3c, E3d, E4) distribués et espacés après la réception des données de certification (machine certificate) et des données de code machine (comp.data) et lorsque le résultat de la vérification de la signature est exempt d'erreur.

13. Système automatisé permettant de mettre en œuvre le procédé selon l'une quelconque des revendications 1 à 12 précédentes, comprenant :
- une pluralité d'environnements d'appareil (E1, E2, E3a, E3b, E3c, E3d, E4) distribués et espacés, lesquels fournissent respectivement un outil de traitement (T1, T2, T3a, T3b, T3c, T3d, T4) du programme utilisateur lié à la sécurité pour générer des données (proj.data, comp.data, startdata, testdata, testrec.data, com.data, machine certificate, cert.data) pour un programme utilisateur pour un dispositif de commande de sécurité, ledit outil de traitement (T1, T2, T3a, T3b, T3c, T3d, T4) du programme utilisateur comprenant en outre un dispositif de signature
- dans lequel
- un premier environnement d'appareil (E1) de ladite pluralité d'environnements d'appareil (E1, E2, E3a, E3b, E3c, E3d, E4) distribués et espacés est configuré sur un terminal utilisateur de communication, lequel est en particulier configuré comme terminal utilisateur de communication mobile,
- un deuxième environnement d'appareil (E2) de ladite pluralité d'environnements d'appareil (E1, E2, E3a, E3b, E3c, E3d, E4) distribués et espacés est configuré sur un ordinateur en nuage, et
- au moins un autre environnement d'appareil (E3a, E3b, E3c, E3d, E4) de ladite pluralité d'environnements d'appareil (E1, E2, E3a, E3b, E3c, E3d, E4) distribués et espacés est configuré, dans lequel
- le premier environnement d'appareil (E1), le deuxième environnement d'appareil (E2) et l'au moins un autre environnement d'appareil (E3a, E3b, E3c, E3d, E4) comportent des interfaces (I1, I2, 13a, 13b, I3c, 13d, 14) et sont configurés pour transmettre des données générées conjointement avec une signature (Sig1, Sig2, Sig3, Sig4, Sig5, Sig6) générée du premier (E1) au deuxième environnement d'appareil (E2), du deuxième (E2) à l'au moins un autre environnement d'appareil (E3a, E3b, E3c, E3d, E4) et de l'au moins un autre environnement d'appareil (E3a, E3b, E3c, E3d, E4) au deuxième environnement d'appareil (E2),
et en particulier dans lequel
- le premier environnement d'appareil (E1) fournit comme outil de traitement (T1) du programme utilisateur un outil de programmation lié à la sécurité pour générer un code source du programme utilisateur ainsi qu'un dispositif de signature coopérant avec l'outil de programmation pour générer une signature (Sig1) au moins sur la base de l'intégralité du code source généré,
- le deuxième environnement d'appareil (E2) fournit comme outil de traitement (T2) du programme utilisateur un outil de compilation lié à la sécurité pour générer un code machine du programme utilisateur ainsi que, de préférence, en outre un outil lié à la sécurité pour générer des données de mise en fonctionnement (startdata) et/ou des données de procédure d'essai (testdata) pour le programme utilisateur, et dans lequel le deuxième environnement d'appareil (E2) comporte un dispositif de signature coopérant avec l'outil ou les outils pour vérifier une signature (Sig1, Sig3, Sig5, Sig6) actuellement reçue et pour générer une signature (Sig2, Sig4) au moins sur la base de l'intégralité des données (comp.data, startdata, testdata, machine certificate) générées dans le deuxième environnement d'appareil (E2) et de la dernière signature (Sig1, Sig3, Sig5, Sig6) respectivement vérifiée.
